(19) **Europäisches Patentamt / European Patent Office / Office européen des brevets**

(11) **EP 4 390 755 A1**

(12) **EUROPEAN PATENT APPLICATION**
published in accordance with Art. 153(4) EPC

(43) Date of publication:
**26.06.2024 Bulletin 2024/26**

(21) Application number: **22869113.5**

(22) Date of filing: **08.09.2022**

(51) International Patent Classification (IPC):
**G06K** /$^{(2006.01)}$

(52) Cooperative Patent Classification (CPC):
**G06N 3/0464; G06N 3/08; G06T 7/40; G06T 9/00**

(86) International application number:
**PCT/CN2022/117817**

(87) International publication number:
**WO 2023/040744 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2021 CN 202111100885**
**04.03.2022 CN 202210208033**

(71) Applicant: **Huawei Technologies Co., Ltd.**
**Shenzhen, Guangdong 518129 (CN)**

(72) Inventors:
- **GAO, Shangyin**
  **Shenzhen, Guangdong 518129 (CN)**
- **WANG, Jing**
  **Shenzhen, Guangdong 518129 (CN)**
- **QIU, Zhongying**
  **Shenzhen, Guangdong 518129 (CN)**
- **LI, Meng**
  **Shenzhen, Guangdong 518129 (CN)**
- **SHI, Yibo**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND APPARATUS FOR DETERMINING IMAGE LOSS VALUE, STORAGE MEDIUM, AND PROGRAM PRODUCT**

(57) Embodiments of this application disclose a method and an apparatus for determining an image loss value, a storage medium, and a program product, and pertain to the field of image compression technologies. In this method, loss values of different areas in an image are determined based on a partition indication map of the image, and then a total loss value is determined based on the loss values of the different areas. This is a loss determining solution with spatial adaptation. A heavily-structured area and a lightly-structured area in the image can be distinguished between by using the partition indication map, that is, the partition indication map can be used to distinguish between an edge structure and a texture. Therefore, when the total loss value is subsequently used to optimize the image encoding and decoding network, reconstruction quality of both the edge structure and the texture can be met, and optimization effects of different areas can be maximally prevented from mutual restriction. When the total loss value is used to assess image reconstruction quality, the image reconstruction quality can be assessed more comprehensively, and assessment of reconstruction quality of the edge structure and the texture can be maximally prevented from mutual impact.

Compress and decompress a first image by using an image encoding and decoding network, to obtain a second image, where the second image is a reconstructed image of the first image — 401

Determine a partition indication map of the first image — 402

Determine, based on the partition indication map and according to at least one loss function, loss values of different areas in the second image relative to the first image — 403

Determine, based on the loss values of the different areas, a total loss value of the second image relative to the first image — 404

FIG. 4

**Description**

This application claims priorities to Chinese Patent Application No. 202111100885.9, filed on September 18, 2021 and entitled "METHOD AND APPARATUS FOR DETERMINING IMAGE LOSS VALUE, STORAGE MEDIUM, AND PROGRAM PRODUCT", and to Chinese Patent Application No. 202210208033.X, filed on March 4, 2022 and entitled "METHOD AND APPARATUS FOR DETERMINING IMAGE LOSS VALUE, STORAGE MEDIUM, AND PROGRAM PRODUCT", both of which are incorporated herein by reference in their entireties.

**TECHNICAL FIELD**

Embodiments of this application relate to the field of image compression technologies, and in particular, to a method and an apparatus for determining an image loss value, a storage medium, and a program product.

**BACKGROUND**

Image compression plays an important role in transmission and storage of images in today's media era, which features a wider variety of types and a larger data amount of images. Currently, a deep learning-based image encoding and decoding network is applied to image compression. The image encoding and decoding network needs to be trained in advance, that is, the image encoding and decoding network needs to be optimized through training, to improve image reconstruction quality. The image encoding and decoding network is optimized mainly based on a loss value determined by using a loss function. In addition, the loss value may also be used as an assessment metric of image reconstruction quality. Therefore, determining of the loss value of the image is quite important in the field of image compression technologies.

In a conventional technology, a first image is first compressed and decompressed by using the image encoding and decoding network, to obtain a reconstructed second image. Then, a loss value of the second image relative to the first image is calculated by using the loss function. The image encoding and decoding network is optimized based on the loss value, and/or the loss value is used as an assessment metric of image reconstruction quality. Currently, there are many loss functions related to image encoding and decoding, and different loss functions correspond to different image reconstruction quality. Currently, people assess image reconstruction quality based more on subjective perception of human eyes. The subjective perception of human eyes mainly focuses on an edge structure, texture, or the like of an image. Some loss functions, such as an L1 loss function and an L2 loss function, focus on improving or assessing reconstruction quality of an edge structure. Other loss functions, such as a perceptual loss function and a generative adversarial loss function, focus on improving or assessing reconstruction quality of texture. In some solutions, one loss function is used to obtain one loss value. In some other solutions, a plurality of loss functions are used to obtain a plurality of loss values of the reconstructed second image relative to the first image, and weighted summation is performed on the plurality of loss values to obtain a total loss value.

However, in the use of the loss value to optimize the image encoding and decoding network, the solution of using one loss function usually cannot satisfy reconstruction quality of both the edge structure and the texture. In the solution in which a plurality of loss functions are used and a plurality of loss values are weighted, optimization effects corresponding to the loss functions are mutually restricted, which imposes a limitation on reconstruction quality of both the edge structure and the texture. When the loss value is used as an assessment metric of image reconstruction quality, the solution of using one loss function usually cannot comprehensively assess image reconstruction quality, and the solution in which a plurality of loss functions are used and a plurality of loss values are weighted also causes assessment of reconstruction quality of the edge structure and the texture to be mutually affected.

**SUMMARY**

Embodiments of this application provide a method and an apparatus for determining an image loss value, a storage medium, and a program product. This solution is intended to resolve a technical problem that reconstruction quality of an edge area and a texture area cannot be satisfied and image reconstruction quality cannot be comprehensively assessed because one same loss function is used to determine a loss value for all areas. This solution is also intended to resolve a technical problem that optimization effects of various loss functions are mutually restricted and assessment of reconstruction quality of an edge structure and a texture is mutually affected because a plurality of loss functions are used to determine a loss value through weighting for all areas. In other words, in this solution, when the loss value is used to optimize an image encoding and decoding network, reconstruction quality of both the edge structure and the texture can be met, and optimization effects of various loss functions can be maximally prevented from mutual restriction. When the loss value is used to assess image reconstruction quality, the image reconstruction quality can be assessed more comprehensively, and assessment of reconstruction quality of the edge structure and the texture by using different loss functions can be maximally prevented from mutual impact. Technical solutions are as follows:

According to a first aspect, a method for determining an image loss value is provided. The method includes: compressing and decompressing a first image by using an image encoding and decoding network, to obtain a second image, where the second image is a reconstructed image of the first image; determining a partition indication map of the first image; determining, based on the partition indication map and according to at least one loss function, loss values of different areas in the second image relative to the first image; and determining, based on the loss values of the different areas, a total loss value of the second image relative to the first image.

This solution is a loss determining solution with spatial adaptation. A heavily-structured area and a lightly-structured area in the image can be distinguished between by using the partition indication map, that is, the partition indication map can be used to distinguish between an edge structure and a texture. Therefore, when the total loss value is subsequently used to optimize the image encoding and decoding network, reconstruction quality of both the edge structure and the texture can be met, and optimization effects of different areas can be maximally prevented from mutual restriction. When the total loss value is used to assess image reconstruction quality, the image reconstruction quality can be assessed more comprehensively, and assessment of reconstruction quality of the edge structure and the texture can be maximally prevented from mutual impact.

The partition indication map indicates a first-type area and a second-type area. Optionally, the partition indication map is an image gradient map, the first-type area includes a structured area, and the second-type area includes an unstructured area. Optionally, the image gradient map is a gradient map represented by gradient masks, and the structured area corresponds to an area, in the image gradient map, in which a gradient mask is 1. If the gradient mask is used to represent the image gradient map, processing efficiency of a computer device can be improved. It may be understood that this solution provides a loss determining solution with spatial adaptation that is based on an image gradient. Different areas of an image are indicated by using an image gradient map, and the different areas include a structured area and an unstructured area.

Optionally, the partition indication map is an image segmentation mask map, the first-type area includes an area in which a target object is located, and the second-type area includes an area in which a non-target object is located. Optionally, the first-type area includes a face area of the target object. In other words, this solution provides a loss determining solution with spatial adaptation that is based on image segmentation (or target detection), where different areas in an image, such as a face area and a non-face area, are indicated by using an image segmentation mask map. It should be noted that, to some extent, the face area in the image is also an area with strong structure information, and may be considered as a main area. Generally, edge reconstruction quality of the main area needs to be ensured, so that a face contour is clear. An area other than the face area in the image is generally an area with weak structure information, and may be considered as a background area. Generally, texture reconstruction quality of the background area needs to be ensured.

Simply speaking, for both the image gradient map and the image segmentation mask map, the area with strong structure information and the area with weak structure information can be distinguished between to some extent.

Optionally, the loss values of the different areas include a first loss value and a second loss value. The determining, based on the partition indication map and according to at least one loss function, loss values of different areas in the second image relative to the first image includes: determining, based on the partition indication map and according to a first loss function, a loss value of a first-type area in the second image relative to a first-type area in the first image, to obtain the first loss value; and determining, based on the partition indication map and according to a second loss function, a loss value of a second-type area in the second image relative to a second-type area in the first image, to obtain the second loss value. In other words, the computer device separately determines the loss value of the first-type area and the loss value of the second-type area. When the partition indication map is the image gradient map, the computer device separately determines a loss value of the structured area and a loss value of the unstructured area. When the partition indication map is the image segmentation mask map, the computer device separately determines a loss value of the area in which the target object is located and a loss value of the area in which a non-target object is located.

Optionally, the determining, based on the partition indication map and according to a second loss function, a loss value of a second-type area in the second image relative to a second-type area in the first image, to obtain the second loss value includes: replacing the first-type area in the second image with the first-type area in the first image based on the partition indication map, to obtain a third image; and determining, according to the second loss function, a loss value of the third image relative to the first image, to obtain the second loss value. In other words, through true value replacement, the third image and the first image are the same in the first-type area, so that the second loss function acts on the first-type area.

Optionally, the determining, based on the partition indication map and according to a second loss function, a loss value of a second-type area in the second image relative to a second-type area in the first image, to obtain the second loss value includes: replacing the first-type area in the first image with the first-type area in the second image based on the partition indication map, to obtain a fourth image; and determining, according to the second loss function, a loss value of the second image relative to the fourth image, to obtain the second loss value. In other words, through a manner similar to true value replacement, the second image and the fourth image are the same in the first-type area, so that the second loss function acts on the second-type area.

Optionally, the second loss function includes at least one of a multi-scale structural similarity (multi-scale structural similarity index measure, MS-SSIM) loss function, a perceptual loss function, and a generative adversarial loss function. In other words, a loss function that is more suitable for perception of human eyes is used in the second-type area (for example, the unstructured area or the non-face area).

Optionally, after the determining, based on the loss values of the different areas, a total loss value of the second image relative to the first image, the method further includes: determining a first gradient optimization map based on the total loss value; and updating, based on the first gradient optimization map, a network parameter of the image encoding and decoding network. In other words, in this solution, the loss value is determined by area to optimize the image encoding and decoding network, so that a reconstruction effect of an optimized image encoding and decoding network is improved in both the structured area and the unstructured area.

Optionally, the loss values of the different areas include a first loss value and a third loss value. The determining, based on the partition indication map and according to at least one loss function, loss values of different areas in the second image relative to the first image includes: determining, based on the partition indication map and according to a first loss function, a loss value of a first-type area in the second image relative to a first-type area in the first image, to obtain the first loss value; and determining, according to a third loss function, a loss value of the second image relative to the first image, to obtain the third loss value. In other words, the computer device separately determines a loss value of the first-type area and loss values of all areas. When the partition indication map is the image gradient map, the computer device separately determines a loss value of the structured area and loss values of all the areas. When the partition indication map is the image segmentation mask map, the computer device separately determines a loss value of the area in which the target object is located and loss values of all the areas.

Optionally, the third loss function includes an L1 loss function and/or an L2 loss function, and the third loss function further includes at least one of a multi-scale structural similarity MS-SSIM loss function, a perceptual loss function, and a generative adversarial loss function; or the third loss function includes at least one of an MS-SSIM loss function, a perceptual loss function, and a generative adversarial loss function.

Optionally, the first loss function includes the L1 loss function and/or the L2 loss function. In other words, the first loss function is a pixel-level loss function.

Optionally, after the determining, based on the loss values of the different areas, a total loss value of the second image relative to the first image, the method further includes: determining a first gradient optimization map based on the total loss value; performing gradient blocking on a first-type area in the first gradient optimization map based on the partition indication map, to obtain a second gradient optimization map; and updating, based on the second gradient optimization map, a network parameter of the image encoding and decoding network. In other words, gradient backpropagation of the first-type area is blocked through gradient blocking, so that the third loss function works for the second-type area. This improves an optimization effect of the second-type area.

Optionally, the performing gradient blocking on a first-type area in the first gradient optimization map based on the partition indication map, to obtain a second gradient optimization map includes: setting, based on the partition indication map, gradient values of the first-type area in the first gradient optimization map to zero, to obtain the second gradient optimization map.

Optionally, the determining, based on the partition indication map and according to a first loss function, a loss value of a first-type area in the second image relative to a first-type area in the first image, to obtain the first loss value includes: determining, based on the partition indication map, an error of each pixel in the first-type area in the second image relative to a corresponding pixel in the first image; and determining the first loss value based on the error of each pixel in the first-type area in the second image relative to the corresponding pixel in the first image. In other words, the first loss value is a point-to-point pixel-level loss value for the first-type area (for example, a structured area or a face area).

Optionally, the determining, based on the loss values of the different areas, a total loss value of the second image relative to the first image includes: performing weighted summation on the loss values of the different areas based on at least two weights, to obtain the total loss value, where when the loss values of the different areas are determined according to one loss function, the at least two weights are different; and when the loss values of the different areas are determined according to at least two loss functions, the at least two weights are different or the same. In other words, if the loss values of the different areas are determined according to different loss functions, because different loss functions have different effects, the computer device does not need to limit weights to be different.

According to a second aspect, an apparatus for determining an image loss value is provided. The apparatus for determining an image loss value has a function of implementing behavior of the method for determining an image loss value in the first aspect. The apparatus for determining an image loss value includes at least one module. The at least one module is configured to implement the method for determining an image loss value provided in the first aspect.

In other words, an apparatus for determining an image loss value is provided, and the apparatus includes:

an encoding and decoding module, configured to compress and decompress a first image by using an image encoding and decoding network, to obtain a second image, where the second image is a reconstructed image of the first image;

a first determining module, configured to determine a partition indication map of the first image;

a second determining module, configured to determine, based on the partition indication map and according to at least one loss function, loss values of different areas in the second image relative to the first image; and

a third determining module, configured to determine, based on the loss values of the different areas, a total loss value of the second image relative to the first image.

Optionally, the loss values of the different areas include a first loss value and a second loss value.

The second determining module includes:

a first determining submodule, configured to determine, based on the partition indication map and according to a first loss function, a loss value of a first-type area in the second image relative to a first-type area in the first image, to obtain the first loss value; and

a second determining submodule, configured to determine, based on the partition indication map and according to a second loss function, a loss value of a second-type area in the second image relative to a second-type area in the first image, to obtain the second loss value.

Optionally, the second determining submodule is configured to:

replace the first-type area in the second image with the first-type area in the first image based on the partition indication map, to obtain a third image; and

determine, according to the second loss function, a loss value of the third image relative to the first image, to obtain the second loss value.

Optionally, the second determining submodule is configured to:

replace the first-type area in the first image with the first-type area in the second image based on the partition indication map, to obtain a fourth image; and

determine, according to the second loss function, a loss value of the second image relative to the fourth image, to obtain the second loss value.

Optionally, the second loss function includes at least one of a multi-scale structural similarity MS-SSIM loss function, a perceptual loss function, and a generative adversarial loss function.

Optionally, the apparatus further includes:

a fourth determining module, configured to determine a first gradient optimization map based on the total loss value; and

a first updating module, configured to update, based on the first gradient optimization map, a network parameter of the image encoding and decoding network.

Optionally, the loss values of the different areas include a first loss value and a third loss value.

The second determining module includes:

a first determining submodule, configured to determine, based on the partition indication map and according to a first loss function, a loss value of a first-type area in the second image relative to a first-type area in the first image, to obtain the first loss value; and

a third determining submodule, configured to determine, according to a third loss function, a loss value of the second image relative to the first image, to obtain the third loss value.

Optionally, the apparatus further includes:

a fourth determining module, configured to determine a first gradient optimization map based on the total loss value;

a gradient blocking module, configured to perform gradient blocking on a first-type area in the first gradient optimization map based on the partition indication map, to obtain a second gradient optimization map; and

a second updating module, configured to update, based on the second gradient optimization map, a network parameter of the image encoding and decoding network.

Optionally, the gradient blocking module includes:
a gradient blocking submodule, configured to set, based on the partition indication map, gradient values of the first-type area in the first gradient optimization map to zero, to obtain the second gradient optimization map.

Optionally, the third loss function includes an L1 loss function and/or an L2 loss function, and the third loss function further includes at least one of a multi-scale structural similarity MS-SSIM loss function, a perceptual loss function, and a generative adversarial loss function; or
the third loss function includes at least one of an MS-SSIM loss function, a perceptual loss function, and a generative adversarial loss function.

Optionally, the first loss function includes the L1 loss function and/or the L2 loss function.

Optionally, the first determining submodule is configured to:

determine, based on the partition indication map, an error of each pixel in the first-type area in the second image relative to a corresponding pixel in the first image; and
determine the first loss value based on the error of each pixel in the first-type area in the second image relative to the corresponding pixel in the first image.

Optionally, the third determining module includes:
a weighting submodule, configured to: perform weighted summation on the loss values of the different areas based on at least two weights, to obtain the total loss value, where when the loss values of the different areas are determined according to one loss function, the at least two weights are different; and when the loss values of the different areas are determined according to at least two loss functions, the at least two weights are different or the same.

Optionally, the partition indication map is an image gradient map, the first-type area includes a structured area, and the second-type area includes an unstructured area.

Optionally, the image gradient map is a gradient map represented by gradient masks, and the structured area corresponds to an area, in the image gradient map, in which a gradient mask is 1.

Optionally, the partition indication map is an image segmentation mask map, the first-type area includes an area in which a target object is located, and the second-type area includes an area in which a non-target object is located.

Optionally, the first-type area includes a face area of the target object.

According to a third aspect, a computer device is provided. The computer device includes a processor and a memory. The memory is configured to store a program for performing the method for determining an image loss value provided in the first aspect, and store data used to implement the method for determining an image loss value provided in the first aspect. The processor is configured to execute the program stored in the memory. An operation apparatus of the storage device may further include a communication bus, and the communication bus is configured to establish a connection between the processor and the memory.

According to a fourth aspect, a computer-readable storage medium is provided. The computer-readable storage medium stores instructions. When the instructions are run on a computer, the computer is enabled to perform the method for determining an image loss value according to the first aspect.

According to a fifth aspect, a computer program product including instructions is provided. When the computer program product runs on a computer, the computer is enabled to perform the method for determining an image loss value according to the first aspect.

Technical effects achieved in the second aspect, the third aspect, the fourth aspect, and the fifth aspect are similar to those achieved by corresponding technical means in the first aspect. Details are not described again herein again.

Technical solutions provided in embodiments of this application can bring at least the following beneficial effects:

In the embodiment of this application, loss values of different areas in an image are determined based on a partition indication map of the image, and then a total loss value is determined based on the loss values of the different areas. It can be learned that this solution is a loss determining solution with spatial adaptation, for example, spatial adaption based on an image gradient or image segmentation (target detection). A heavily-structured area and a lightly-structured area in the image can be distinguished between by using the partition indication map, that is, the partition indication map can be used to distinguish between an edge structure and a texture. Therefore, when the total loss value is subsequently used to optimize the image encoding and decoding network, reconstruction quality of both the edge structure and the texture can be met, and optimization effects of different areas can be maximally prevented from mutual restriction. When the total loss value is used to assess image reconstruction quality, the image reconstruction quality can be assessed more comprehensively, and assessment of reconstruction quality of the edge structure and the texture can be maximally prevented from mutual impact.

**BRIEF DESCRIPTION OF DRAWINGS**

FIG. 1 is a schematic diagram of an image compression framework according to an embodiment of this application;
FIG. 2 is a schematic diagram of another image compression framework according to an embodiment of this application;
FIG. 3 is a schematic diagram of a structure of a computer device according to an embodiment of this application;
FIG. 4 is a flowchart of a method for determining an image loss value according to an embodiment of this application;
FIG. 5 is a system architectural diagram of a method for optimizing an image encoding and decoding network according to an embodiment of this application;
FIG. 6 is a flowchart of a method for optimizing an image encoding and decoding network according to an embodiment of this application;
FIG. 7 is a flowchart of an image quality assessment method according to an embodiment of this application;
FIG. 8 is a diagram of a system architecture of another method for optimizing an image encoding and decoding network according to an embodiment of this application;
FIG. 9 is a diagram of effect comparison between a group of images according to an embodiment of this application;
FIG. 10 is a diagram of a system architecture of still another method for optimizing an image encoding and decoding network according to an embodiment of this application;
FIG. 11 is a diagram of a system architecture of yet another method for optimizing an image encoding and decoding network according to an embodiment of this application;
FIG. 12 is a comparison diagram of optimization effects in terms of objective metrics according to an embodiment of this application;
FIG. 13 is a diagram of effect comparison between another group of images according to an embodiment of this application;
FIG. 14 is a diagram of a system framework of an image quality assessment method according to an embodiment of this application;
FIG. 15 shows four images of four qualities according to an embodiment of this application;
FIG. 16 is a diagram of a system framework of still yet another method for optimizing an image encoding and decoding network according to an embodiment of this application; and
FIG. 17 is a schematic diagram of a structure of an apparatus for determining an image loss value according to an embodiment of this application.

**DESCRIPTION OF EMBODIMENTS**

To make objectives, technical solutions, and advantages of embodiments of this application clearer, the following further describes implementations of this application in detail with reference to the accompanying drawings.

For ease of understanding, some terms in embodiments of this application are first explained.

Artificial intelligence (artificial intelligence, AI) is new technical science that studies and develops theories, methods, technologies, and application systems for simulating, extending, and expanding human intelligence.

Bit rate: In image compression, a bit rate refers to a coding length required for coding a unit pixel. A higher bit rate indicates better image reconstruction quality. The bit rate is also referred to as a compression bit rate.

Generative adversarial training is for training a generative adversarial network (generative adversarial network, GAN). The GAN includes a generator and a discriminator. The generator is expected to output a close-to-real image to obfuscate the discriminator. The discriminator is expected to distinguish a real image from a generated image. A training method in which the generator and the discriminator interact with each other is referred to as a generative adversarial training method.

Perceptual coding: is coding that better meets subjective perception of human eyes. For example, generative adversarial training is performed on the generative adversarial network, so that when a trained generator is used as an image decoding network, a reconstructed image (also referred to as a reconstructed image) output by the image decoding network better meets subjective perception of human eyes.

A convolutional neural network (convolution neural network, CNN): is a neural network that includes convolution calculation and has a deep structure, and is a representative of deep learning networks.

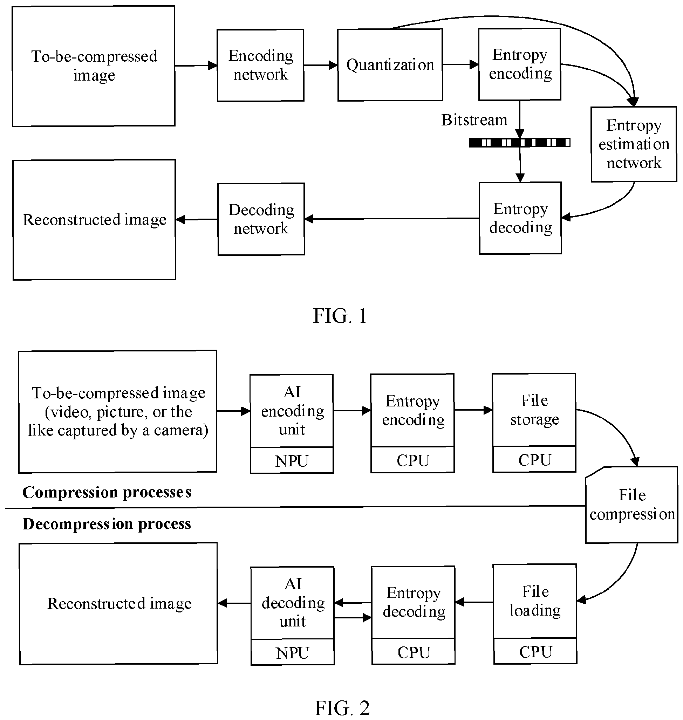

A variational self-encoder (variational auto-encoder, VAE): is an AI-based image codec. In embodiments of this application, a VAE-based image compression framework is used as an example for description. The VAE-based image compression framework is shown in FIG. 1. In an encoding process, a to-be-compressed image is input into an encoding network to obtain a to-be-encoded feature. The to-be-encoded feature is quantized to obtain a quantized to-be-encoded feature. A probability distribution is estimated by using an entropy estimation network based on the quantized to-be-encoded feature. Entropy encoding is performed on the quantized to-be-encoded feature based on the probability distribution, to obtain an image bitstream. A decoding process is corresponding to the encoding process. A decoding network is a generator obtained through generative adversarial training.

Bits per pixel (bits per pixel, BPP): represents a quantity of bits used for storing each pixel. A smaller BPP indicates a smaller compression bit rate.

A peak signal to noise ratio (peak signal to noise ratio, PSNR): is an objective criterion for assessing image quality. A larger PSNR indicates better image quality.

An L1 loss function: is a function for measuring a distance between two pieces of data. An average of errors between points is calculated to obtain an L1 loss value. An L1 loss is a pixel-level loss. The L1 loss function can better assess reconstruction quality of a structured area in an image.

A mean squared error (mean squared error, MSE): is a function that measures a distance between two pieces of data. In embodiments of this application, the MSE is also referred to as an L2 loss function. An average of squares of errors between points is calculated to obtain an L2 loss value. The MSE may also be used to calculate the PSNR. An L2 loss is also a pixel-level loss. The L2 loss function can also better assess reconstruction quality of a structured area in an image. If the L2 loss function is used to optimize an image encoding and decoding network, an optimized image encoding and decoding network can achieve a better PSNR.

A structural similarity (structural similarity index measure, SSIM) is an objective criterion for assessing image quality. A higher SSIM indicates better image quality. In embodiments of this application, a structural similarity between two images on a scale is calculated to obtain an SSIM loss value. An SSIM loss is a loss based on an artificial feature. Compared with the L1 loss function and the L2 loss function, an SSIM loss function can more objectively assess image reconstruction quality, that is, can more evenly assess a structured area and an unstructured area of an image. If the SSIM loss function is used to optimize the image encoding and decoding network, an optimized image encoding and decoding network can achieve a better SSIM.

A multi-scale structural similarity (multi-scale SSIM, MS-SSIM): is an objective criterion for assessing image quality. A higher SSIM indicates better image quality. Multi-layer low-pass filtering and downsampling are separately performed on two images, to obtain image pairs of a plurality of scales. A contrast map and structure information are extracted from an image pair of each scale, to obtain an SSIM loss value of the corresponding scale based on the contrast map and the structure information. Brightness information of an image pair on a smallest scale is extracted, to obtain a brightness loss value of the smallest scale based on the brightness information. Then, SSIM loss values and brightness loss values of the plurality of scales are aggregated in a specific form to obtain an MS-SSIM loss value. For example, an aggregation mode is shown in formula (1).

$$MS\text{-}SSIM(x,y) = \left[l_M(x,y)\right]^{\alpha_M} * \prod_{j=1}^{M} \left[c_j(x,y)\right]^{\beta_j} \left[s_j(x,y)\right]^{\gamma_j} \qquad (1)$$

In formula (1), loss values of all scales are aggregated through exponential weighting and multiplication, where $x$ and $y$ represent two images respectively, $l$ represents a loss value based on the brightness information, c represents a loss value based on the contrast map, s represents a loss value based on the structure information, subscript j= 1, ..., M represents M scales respectively corresponding to M times of downsampling, j=1 represents a largest scale, j=M represents a smallest scale, and superscripts $\alpha$, $\beta$, $\gamma$ represent exponents of corresponding items.

An MS-SSIM loss function provides similar or better assessment effects on an image compared with the SSIM loss function. Compared with the L1 loss and the L2 loss, an optimized MS-SSIM loss can improve subjective perception of human eyes and meet an objective assessment metric. If the MS-SSIM loss function is used to optimize the image encoding and decoding network, an optimized image encoding and decoding network can achieve better MS-SSIM.

Visual geometry group (visual geometry group, VGG) loss: A VGG is the name of an organization that designs a CNN network and names the network VGG network. An image loss value determined based on the VGG network is referred to as a VGG loss value. A process of determining the VGG loss value is roughly as follows: A feature (for example, a feature map obtained after convolution calculation at a layer) of an original image before compression and a feature of a decompressed reconstructed image on a specific scale are separately extracted by using the VGG network, and then a distance between the feature of the original image and the feature of the reconstructed image on the scale is calculated, to obtain the VGG loss value. This process is considered as a process of determining the VGG loss value according to a VGG loss function. The VGG loss function focuses on improving reconstruction quality of texture.

A learned perceptual image patch similarity (learned perceptual image patch similarity, LPIPS) loss: is an enhanced version of the VGG loss, and a multi-scale property is introduced in a process of determining an LPIPS loss value. The process of determining the LPIPS loss value is roughly as follows: Features of two images on a plurality of scales are separately extracted by using the VGG network, and then a distance between the features of the two images on the scales is calculated, to obtain a plurality of VGG loss values. Then, weighted summation is performed on the plurality of VGG loss values to obtain the LPIPS loss value. This process is considered as a process of determining the LPIPS loss value according to an LPIPS loss function. Similar to the VGG loss function, the LPIPS loss function also focuses on improving reconstruction quality of texture.

Generative adversarial loss: Features of two images are separately extracted by using a discriminator (also referred to as a discriminator) included in the GAN, and a distance between the features of the two images is calculated, to obtain a generative adversarial loss value. This process is considered as a process of determining a GAN loss value according to a GAN loss function. The GAN loss function also focuses on improving reconstruction quality of texture. A GAN loss includes at least one of a standard GAN loss, a relative GAN loss, a relative average GAN loss, a least square GAN loss, and the like.

Perceptual loss: is classified into a perceptual loss in a broad sense and a perceptual loss in a narrow sense. In embodiments of this application, the perceptual loss in a narrow sense is used as an example for description. The VGG loss and the LPIPS loss may be considered as perception losses in a narrow sense. However, in other embodiments, any loss calculated by using depth features extracted from an image may be considered as a perceptual loss in a broad sense. The perceptual loss in a broad sense may include the perceptual loss in a narrow sense, and may further include a loss such as the GAN loss described above. The perceptual loss function makes a reconstructed image closer to subjective perception of human eyes, but may have poor performance in terms of PSNR and MS-SSIM.

Image quality assessment (image quality assessment, IQA): is classified into full reference image quality assessment (full reference IQA, FR-IQA) and no reference image quality assessment (no reference IQA, NR-IQA). FR-IQA is mainly performed in embodiments of this application. A metric of image quality assessment includes PSNR, SSIM, MS-SSIM, LPIPS, or the like.

The following describes a system framework and a service scenario in embodiments of this application.

An embodiment of this application provides a method for determining an image loss value. A determined loss value may be used to optimize an image encoding and decoding network, or the determined loss value may be used as an assessment metric of image reconstruction quality, or the determined loss value may be used as a reference basis for other subsequent processing. This is not limited in this embodiment of this application. It should be noted that a device for determining an image loss value is not limited in this embodiment of this application, and a device for optimizing the image encoding and decoding network based on the loss value is not limited. The device for determining an image loss value and the device for optimizing the image encoding and decoding network may be a same device, or may be different devices. Determining an image loss value and optimizing the image encoding and decoding network on one device is used as an example for description below.

A computer device is used as an example. The computer device can determine, according to the method for determining an image loss value provided in this embodiment of this application, a total loss value of a reconstructed image relative to an image before compression. Optionally, the computer device can further optimize the image encoding and decoding network based on the total loss value, including optimizing an image encoding network and an image decoding network. Optionally, the computer device can further use the total loss value as an assessment metric of image reconstruction quality.

After the image encoding and decoding network is optimized by using the loss value, an optimized image encoding and decoding network can be applied to image compression in various devices in various scenarios. For example, the optimized image encoding and decoding network is applied to a terminal, a cloud, or the like for image compression, to facilitate image storage and transmission. For another example, the optimized image encoding and decoding network is applied to a scenario such as terminal video recording, video surveillance, cloud storage, or live broadcast.

FIG. 2 is a diagram of a system framework of image compression according to an embodiment of this application. In a compression process, an encoder side obtains a to-be-compressed image, for example, an image such as a video or a picture captured by a camera. Then, an AI encoding unit obtains a to-be-encoded feature and a corresponding probability distribution, and performs entropy encoding on the to-be-encoded feature based on the probability distribution, to obtain a bitstream file, namely, a compressed file of the image. The compressed file is input to a decoder side. The decoder side loads the compressed file and obtains a reconstructed image through entropy decoding by an AI decoding unit. The AI encoding unit and the AI decoding unit are respectively an image encoding network and an image decoding network that are included in an image encoding and decoding network optimized in this solution. It should be noted that an image encoding and decoding principle of the image compression framework shown in FIG. 2 is similar to that of the image compression framework shown in FIG. 1. The AI encoding unit in FIG. 2 is equivalent to including the encoding network and the entropy estimation network in FIG. 1, and the AI decoding unit is equivalent to including the decoding network and the entropy estimation network in FIG. 1.

Optionally, a process of data processing by the AI encoding unit and the AI decoding unit is implemented on an embedded neural network processing unit (neural network processing unit, NPU), to improve data processing efficiency. Processes such as entropy encoding, file storage, and file loading are implemented on a central processing unit (central processing unit, CPU).

Optionally, the encoder side and the decoder side are one device, or the encoder side and the decoder side are two independent devices. If the encoder side and the decoder side are one device, the device can compress an image by using an optimized image encoding network, and can further decompress an image by using an optimized image decoding network. If the encoder side and the decoder side are two independent devices, the optimized image encoding network may be applied to the encoder side in the two devices, and the optimized image decoding network may be applied to the decoder side in the two devices. In other words, for a device, the device has both an image compression function and an image decompression function, or the device has an image compression function or an image decompression function.

It should be noted that the system architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the system architecture and emergence of a new service scenario, the technical solutions provided in embodiments of this application are also applicable to similar technical problems.

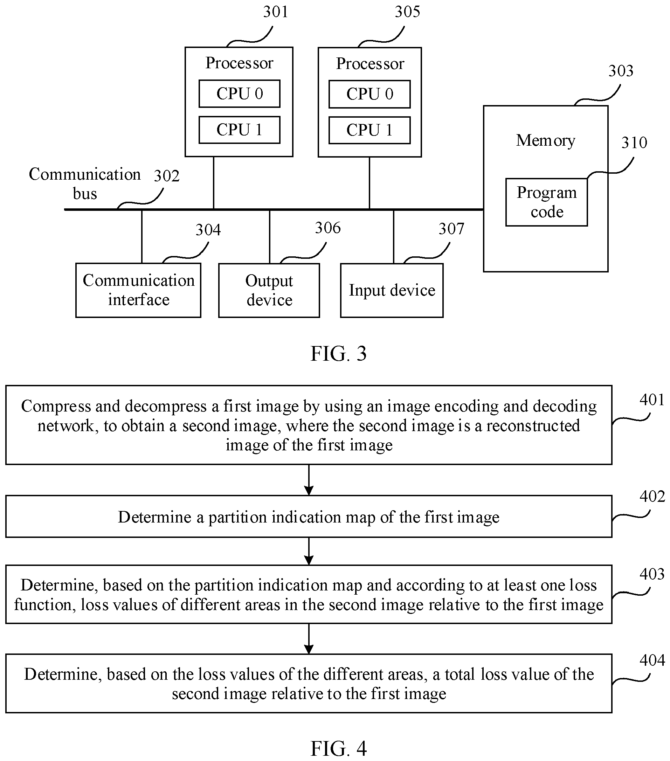

FIG. 3 is a schematic diagram of a structure of a computer device according to an embodiment of this application. The computer device includes at least one processor 301, a communication bus 302, a memory 303, and at least one communication interface 304.

The processor 301 is a general-purpose central processing unit (central processing unit, CPU), a network processor (network processing, NP), a microprocessor, or one or more integrated circuits configured to implement the solutions in this application, for example, an application-specific integrated circuit (application-specific integrated circuit, ASIC), a programmable logic device (PLD), or a combination thereof. Optionally, the PLD is a complex programmable logic device (complex programmable logic device, CPLD), a field-programmable gate array (field-programmable gate array, FPGA), a generic array logic (generic array logic, GAL), or any combination thereof.

The communication bus 302 is configured to transmit information between the components. Optionally, the communication bus 302 is classified into an address bus, a data bus, a control bus, and the like. For ease of representation, only one thick line is used to represent the bus in the figure, but this does not mean that there is only one bus or only one type of bus.

Optionally, the memory 303 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible to a computer. However, the memory 303 is not limited thereto. The memory 303 exists independently, and is connected to the processor 301 through the communication bus 302. Alternatively, the memory 303 and the processor 301 are integrated together.

The communication interface 304 uses any apparatus such as a transceiver, and is configured to communicate with another device or a communication network. The communication interface 304 includes a wired communication interface, and optionally, further includes a wireless communication interface. The wired communication interface is, for example, an Ethernet interface. Optionally, the Ethernet interface is an optical interface, an electrical interface, or a combination thereof. The wireless communication interface is a wireless local area network (wireless local area networks, WLAN) interface, a cellular network communication interface, or a combination thereof.

Optionally, in some embodiments, the computer device includes a plurality of processors, for example, the processor 301 and the processor 305 shown in FIG. 3. Each of the processors is a single-core processor or a multicore processor. Optionally, the processor herein is one or more devices, circuits, and/or processing cores configured to process data (for example, computer program instructions).

In a specific implementation, in an embodiment, the computer device further includes an output device 306 and an input device 307. The output device 306 communicates with the processor 301, and can display information in a plurality of manners. For example, the output device 306 is a liquid crystal display (liquid crystal display, LCD), a light emitting diode (light emitting diode, LED) display device, a cathode ray tube (cathode ray tube, CRT) display device, a projector (projector), or the like. The input device 307 communicates with the processor 301, and can receive an input of a user in a plurality of manners. For example, the input device 307 is a mouse, a keyboard, a touchscreen device, a sensor device, or the like.

In some embodiments, the memory 303 is configured to store program code 310 for executing the solutions of this application, and the processor 301 can execute the program code 310 stored in the memory 303. The program code 310 includes at least one software module. The computer device can implement, by using the processor 301 and the program code 310 in the memory 303, a method for determining an image loss value provided in the following embodiment in FIG. 4.

FIG. 4 is a flowchart of a method for determining an image loss value according to an embodiment of this application. The method is applied to a computer device. As shown in FIG. 4, the method includes the following steps.

**Step 401:** Compress and decompress a first image by using an image encoding and decoding network, to obtain a second image, where the second image is a reconstructed image of the first image.

In this embodiment of this application, the computer device first compresses and decompresses the first image by using the image encoding and decoding network, to obtain the second image, where the second image is a reconstructed image of the first image. For example, the computer device performs image encoding and decoding by using the image compression framework shown in FIG. 1 or the image compression framework shown in FIG. 2. The image encoding and decoding network includes an image encoding network and an image decoding network. The computer device compresses the first image by using the image encoding network, to obtain a compressed image, and the computer device decompresses a compressed image by using the image decoding network, to obtain the second image. The first image has the same size as the second image.

If it is determined in this solution that a loss value is used to optimize the image encoding and decoding network, the first image is any image sample in a plurality of image samples included in a training dataset. The computer device compresses and decompresses the plurality of image samples by using the to-be-optimized image encoding and decoding network, to obtain reconstructed image samples that are in a one-to-one correspondence with the plurality of image samples. Optionally, the image samples in the training dataset include an image in a public dataset, or may include an image captured, or may include an image purchased from a third party. This is not limited in this embodiment of this application.

If it is determined in this solution that the loss value is used to assess image reconstruction quality, the first image is any image, for example, an image captured by the computer device or an image obtained from another device.

Step 402: Determine a partition indication map of the first image.

In this embodiment of this application, the computer device further needs to determine the partition indication map of the first image, so that loss calculation with spatial adaptation based on image partition is subsequently performed in step 403, that is, loss values are separately calculated for different areas of the image based on an indication of the partition indication map.

In an implementation of this embodiment of this application, the partition indication map is an image gradient map. The image gradient map is determined based on change degrees of grayscale values of the image. The image gradient map indicates a structured area and an unstructured area. The structured area is a first-type area, and corresponds to an area in which a grayscale value changes significantly, for example, an edge area. The unstructured area is a second-type area, and corresponds to an area in which a grayscale value changes slightly, for example, a texture area. For example, the edge area is an edge of text or an outline of an object in an image, and the texture area is a desk surface, a wall, or grassland in the image.

It should be noted that there are many methods for determining the image gradient map. This is not limited in this application. For example, the computer device extracts the image gradient map from the first image by using a Laplacian operator, a Sobel operator, a Schsrr operator, a Canny operator, or the like. In this way, the extracted image gradient map is represented by a floating point number. An area in which a gradient value is greater than a grayscale threshold in the image gradient map corresponds to the structured area, and an area in which a gradient value is less than the grayscale threshold in the image gradient map corresponds to the unstructured area. Optionally, the grayscale threshold is a preset value. For example, the grayscale threshold is preset to 10, 50, or the like, or the grayscale threshold is determined based on an average value or a median value of gradient values in the extracted image gradient map represented by a floating point number.

Optionally, the computer device uses the extracted image gradient map as the image gradient map of the first image, or the computer device performs binarization processing on the extracted image gradient map to obtain an image gradient map represented by a gradient mask. Optionally, in addition to performing binarization processing on the extracted image gradient map, the computer device may perform further processing, for example, expansion and cluttered area removal, on an image gradient map obtained after the binarization processing, to obtain an image gradient map that can more accurately distinguish between the structured area and the unstructured area. The cluttered area removal processing is, for example, removing an isolated point.

The computer device performs binarization processing on the extracted image gradient map by using a binarization threshold, that is, sets a gradient value greater than or equal to the binarization threshold in the extracted image gradient map to 1, and sets a gradient value less than the binarization threshold in the extracted image gradient map to 0, so as to obtain a gradient map represented by a gradient mask. In this embodiment of this application, it is assumed that the image gradient map is a gradient map represented by a gradient mask. In this case, the structured area corresponds to an area, in the image gradient map, in which a gradient mask is 1, and the unstructured area corresponds to an area, in the image gradient map, in which a gradient mask is 0. Optionally, the binarization threshold is a preset value. For example, the binarization threshold is preset to 10, 20, or the like. Alternatively, the binarization threshold is determined based on the average value or the median value of gradient values in the extracted image gradient map represented by a floating point number. Optionally, the binarization threshold is the same as the foregoing grayscale threshold.

In another implementation of this embodiment of this application, the partition indication map is an image segmentation mask map. The image segmentation mask map indicates an area in which a target object is located and an area in which a non-target object is located in the image. The area in which the target object is located is the first-type area, and the area in which the non-target object is located is the second-type area. Optionally, the area in which the target object is located includes a face area. The image segmentation mask map is determined after target object recognition is performed on the first image, or is determined after an operation of marking an area in which a target object is located in the first image is detected. Optionally, the area in which the target object is located includes a face area. In another embodiment, the area in which the target object is located may also include an area in which another object other than a face is located, for example, an area in which one or more objects such as a vehicle, a cat, or a dog are located. Simply speaking, the target object is not limited in this embodiment of this application.

Optionally, the computer device inputs the first image into a target detection model (which may also be referred to as a target recognition model), to obtain an image segmentation mask map output by the target detection model. The area in which the target object detected by the computer device by using the target detection model is located may be a rectangular area or an area in another shape. Optionally, the target detection model is a neural network model, for example, a deep learning network model such as a convolutional neural network or a circular convolutional neural network. A structure of the target detection model and a training method therefor, and the like are not limited in this embodiment of this application. Alternatively, the computer device detects an operation performed by a user of marking the area in which the target object is located in the first image, to obtain the image segmentation mask map of the first image. The user may mark the area in which the target object is located by using a rectangular frame, or may mark the area in which the target object is located by using another shape. Optionally, the area in which the target object is located corresponds to an area in which a mask is 1 in the image segmentation mask map, and the area in which the non-target object is located corresponds to an area in which a mask is 0 in the image segmentation mask map.

In the following embodiment, an example in which the area in which the target object is located includes a face area is used for description. It should be noted that, to some extent, the face area in the image is also an area with strong structure information, and may be considered as a main area. Generally, reconstruction quality of an edge of the main area needs to be ensured, so that a face contour is clear. An area other than the face area in the image is generally an area with weak structure information, and may be considered as a background area. Generally, texture reconstruction quality of the background area needs to be ensured.

It is assumed that the area in which the target object is located includes a face area, and the target detection model is a face detection model. The computer device inputs the first image into the face detection model, to obtain an image segmentation mask map output by the face detection model. A face area detected by the computer device by using the face detection model may be a rectangular area or an area in another shape. Alternatively, the computer device detects an operation performed by a user of marking the face area in the first image, to obtain the image segmentation mask map of the first image. The user may mark the face area by using a rectangular frame, or may mark the face area by using another shape. Optionally, the face area corresponds to an area in which a mask is 1 in the image segmentation mask map, and a non-face area corresponds to an area in which a mask is 0 in the image mask map.

The foregoing describes the use of the image gradient map or the image segmentation mask map to indicate different areas of an image. In some other embodiments, other methods than the image gradient map and the image segmentation mask map may be used to distinguish between different areas of an image, provided that a network can be optimized by area or image quality can be assessed by area. Simply speaking, the partition indication map may be any indication map that can distinguish between different areas of an image. Image features of different areas are different.

It should be noted that step 401 and step 402 may be performed in parallel, or step 401 is performed before step 402, or step 401 is performed after step 402. This is not limited in this embodiment of this application.

**Step 403:** Determine, based on the partition indication map and according to at least one loss function, loss values of different areas in the second image relative to the first image.

In this embodiment of this application, after determining the partition indication map of the first image, the computer device determines, based on the partition indication map and according to at least one loss function, loss values of different areas in the second image relative to the first image, that is, separately calculates loss values of different areas in the image based on an indication of the partition indication map. It should be noted that in this embodiment of this application, there are a plurality of implementations of step 403, two of which are described below.

Implementation 1

In this implementation, the loss values of different areas determined by the computer device include a first loss value and a second loss value. The computer device determines, based on the partition indication map and according to a first loss function, a loss value of a first-type area in the second image relative to a first-type area in the first image, to obtain the first loss value. The computer device determines, based on the partition indication map and according to a second loss function, a loss value of a second-type area in the second image relative to a second-type area in the first image, to obtain the second loss value. In other words, the computer device separately determines the loss value of the first-type area and the loss value of the second-type area. When the partition indication map is the image gradient map, the computer device separately determines a loss value of the structured area and a loss value of the unstructured area. When the partition indication map is the image segmentation mask map, the computer device separately determines a loss value of the area in which the target object is located and a loss value of the area in which a non-target object is located.

First, an implementation process in which the computer device determines the loss value of the first-type area by using the first loss function is described.

Optionally, the computer device determines, based on the partition indication map, an error of each pixel in the first-type area in the second image relative to a corresponding pixel in the first image. Then, the computer device determines the first loss value based on the error of each pixel in the first-type area in the second image relative to the corresponding pixel in the first image. In other words, the computer device performs point-to-point pixel-level loss calculation on the first-type area, to determine the first loss value. The first-type area is an area with strong structure information, such as a structured area or a face area. A pixel-level loss is calculated for this type of area, so that reconstruction quality of the area can be better measured.

In this embodiment of this application, the first loss function includes a pixel-level loss function. The first loss function represents a loss function set, and the loss function set includes at least one loss function. Optionally, the first loss function includes a pixel-level loss function such as an L1 loss function or an L2 loss function. It can be learned from the foregoing description that both the L1 loss function and the L2 loss function are used to calculate a point-to-point pixel-level loss, and can better measure reconstruction quality of the structured area.

For example, it is assumed that the first loss function includes the L1 loss function, and the partition indication map is the image gradient map. In this case, the computer device determines, based on the image gradient map, errors of pixels in a structured area in the second image relative to corresponding pixels in the first image, and then determines, as the first loss value, an average value of the errors of the pixels in the structured area in the second image relative to the corresponding pixels in the first image. The process may be further understood with reference to the following formula (2).

$$L_1 = E\left(mask{*}d\left(x,\hat{x}\right)\right) \qquad (2)$$

In formula (2), *mask* represents an image gradient map represented by a gradient mask, where the image gradient map is a matrix whose element value is 0 or 1; $d(\cdot)$ is used to calculate an error; and $d(x,\hat{x})$ represents an error matrix obtained by calculating errors of pixels in a second image $\hat{x}$ relative to corresponding pixels in a first image x. Sizes of *mask* and $d(x,\hat{x})$ are consistent with a size of the first image. $mask{*}d(x,\hat{x})$ represents point multiplication of *mask* and $d(x,\hat{x})$, to set to zero, errors of an unstructured area in the second image relative to an unstructured area in the first image, so as to obtain an error matrix after zero resetting is performed for the unstructured area. The error matrix represents errors of pixels in a structured area in the second image relative to corresponding pixels in the first image. $E(\cdot)$ is used to calculate an average value, and $L_1$ represents a finally obtained L 1 loss value of the structured area, that is, the first loss value.

It is assumed that the first loss function includes the L2 loss function, and the partition indication map is the image gradient map. In this case, the computer device determines, based on the image gradient map, errors of pixels in a structured area in the second image relative to corresponding pixels in the first image, and then determines, as the first loss value, an average value of the errors of the pixels in the structured area in the second image relative to the corresponding pixels in the first image. The process may be further understood with reference to the following formula (3).

$$L_2 = E\left(mask{*}d^2\left(x,\hat{x}\right)\right) \qquad (3)$$

A difference between formula (3) and formula (2) lies in that, in formula (3), it is necessary to square each element in the error matrix $d(x,\hat{x})$, to obtain a square error matrix $d^2(x,\hat{x})$. Then, point multiplication is performed on *mask* and $d^2(x,\hat{x})$. $L_2$ represents a finally obtained L2 loss value of the structured area, that is, an MSE loss value of the structured area, namely, the first loss value. It should be noted that formula (3) is merely used as an example to describe this solution, and is not used to limit this solution. Optionally, the computer device may first perform point multiplication on *mask* and $d(x,\hat{x})$ to obtain an error matrix obtained after zero resetting is performed for the unstructured area. Then, elements in the error matrix are squared to obtain a square error matrix, and the elements in the square error matrix are averaged to obtain $L_2$.

It is assumed that the first loss function includes the L1 loss function and the L2 loss function, and the partition indication map is the image gradient map. In this case, after separately obtaining the L1 loss value and the L2 loss value through the foregoing method, the computer device performs weighted summation on the L1 loss value and the L2 loss value, to obtain the first loss value. It should be noted that a weight for weighting the L1 loss value and the L2 loss value is not limited in this embodiment of this application.

The following describes an implementation process in which the computer device determines the loss value of the second-type area by using the second loss function.

It should be noted that the second-type area is an area with weak structure information, such as an unstructured area or a non-face area. A non-pixel-level loss is calculated for this type of area, so that reconstruction quality of the area can be better measured.

Optionally, the second loss function represents a loss function set, and the loss function set includes at least one loss function. For example, the second loss function includes at least one of an SSIM loss function, an MS-SSIM loss function, a perceptual loss function, a generative adversarial loss function (namely, a GAN loss function), or the like. The perceptual loss function includes at least one of a VGG loss function, an LPIPS loss function, or the like. It can be learned from the foregoing description that the MS-SSIM loss function, the perceptual loss function, and the generative adversarial loss function are not used to calculate a point-to-point pixel-level loss, and therefore can better measure reconstruction quality of a texture area, and focus more on subjective perception of human eyes.

It should be noted that, in this embodiment of this application, in the process in which the computer device calculates the loss value by using the second loss function, a complete image needs to be used for calculation. In addition, in this process, a feature needs to be extracted (for example, the perceptual loss function and the GAN function) from the image, downsampling (for example, the MS-SSIM loss function) needs to be performed on the image, or the like. Neighbor information of a pixel needs to be referenced regardless of extracting a feature from the image or performing downsampling on the image. Based on this, the computer device needs to make the first-type area of the first image be consistent with the first-type area of the second image, to eliminate a difference between the first-type areas (such as structured areas or face areas), so that the second loss function acts only on the second-type area, and does not damage neighbor information. In other words, accuracy of neighbor information is ensured during image feature extraction or downsampling, to calculate a correct second loss value.

In this embodiment of this application, the computer device can replace the first-type area in the image, so that first-type areas in the two images are consistent after replacement. In an implementation, the computer device replaces the first-type area in the second image with the first-type area in the first image based on the partition indication map, to obtain a third image. Then, the computer device determines, according to the second loss function, a loss value of the third image relative to the first image, to obtain the second loss value. In another implementation, the computer device replaces the first-type area in the first image with the first-type area in the second image based on the partition indication map, to obtain a fourth image. Then, the computer device determines, according to the second loss function, a loss value of the second image relative to the fourth image, to obtain the second loss value.

For example, the first-type area including a structured area is used as an example. The computer device replaces the structured area in the second image $\hat{x}$ with the structured area in the first image x by using the following formula (4), to obtain the third image $\hat{x}_{rep}$.

$$\hat{x}_{rep} = mask*x + (1 - mask)*\hat{x} \qquad (4)$$

In formula (4), *mask* represents an image gradient map represented by a gradient mask, where the image gradient map is a matrix whose element value is 0 or 1; (1-mask) indicates gradient inversion performed on the mask, that is, 1 in the mask is set to 0, and 0 is set to 1; and * in formula (4) represents point multiplication.

It can be learned from formula (4) that, the first implementation in which the computer device replaces the first-type area in the image is essentially replacing a pixel value of an area that is in the reconstructed second image $\hat{x}$ and whose corresponding mask 1 with a truth value (the truth value is a pixel value before compression) of a corresponding area in the first image x. In other words, this is a process of performing truth value replacement on the image. Similarly, the second implementation in which the computer device replaces the first-type area in the image is essentially replacing a pixel value of an area that is in the first image x and whose corresponding mask is 1 with a reconstructed value (the reconstructed value is a decompressed pixel value) of a corresponding area in the reconstructed second image $\hat{x}$.

It should be noted that, in this embodiment of this application, the implementation process in which the computer device determines, according to the second loss function, the loss value of the third image relative to the first image to obtain the second loss value is similar to that in which the computer device determines, according to the second loss function, the loss value of the second image relative to the fourth image to obtain the second loss value, and a difference lies only in that the processed images are different.

For example, the implementation process in which the computer device determines, according to the second loss function, the loss value of the third image relative to the first image to obtain the second loss value is used as an example. Assuming that the second loss function includes the perceptual loss function and the generative adversarial loss function, and the perceptual loss function includes the LPIPS loss function, the computer device separately inputs the first image and the third image into a VGG network, to separately extract, through the VGG network, features of the first image and the third image on a plurality of scales. Then, the computer device calculates distances between features of the first image and the third image on the scales, to obtain a plurality of VGG loss values. Then, the computer device performs weighted summation on the plurality of VGG loss values to obtain an LPIPS loss value. In addition, the computer device inputs the first image and the third image into a discriminator included in a generative adversarial network, to separately extract features of the first image and the third image by using the discriminator. The computer device calculates a distance between features of the first image and the third image, to obtain a GAN loss value. Alternatively, the discriminator separately obtains a probability that the first image is a real image and a probability that the second image is a real image, and the computer device calculates a difference between the probabilities to obtain the GAN loss value. Then, the computer device performs weighted summation on the LPIPS loss value and the GAN loss value, to obtain the second loss value. It should be noted that, assuming that the second loss function includes another type of loss function, the computer device calculates a loss value of a corresponding type according to the corresponding loss function. If the second loss function includes a plurality of loss functions, the computer device separately obtains a plurality of loss values, and the computer device may obtain the second loss value by performing weighted summation on the plurality of loss values.

In the embodiment described above, the first loss function includes a pixel-level loss function, for example, at least one of the L1 loss function the L2 loss function, or the like. In some other embodiments, the first loss function may further include at least one of the MS-SSIM loss function, the perceptual loss function, and the generative adversarial loss function. In other words, the first loss function includes both a loss function focusing on assessing reconstruction quality of an edge structure and a loss function focusing on assessing reconstruction quality of a texture. The computer device can also make the second-type area in the first image to be consistent with the second-type area in the second image through area replacement, and then calculate a corresponding loss value by using at least one of the MS-SSIM loss function, the perceptual loss function, and the generative adversarial loss function. This is similar to the foregoing principle of determining related content in the second loss value. Details are not described herein again. In some other embodiments, the second loss function may further include a pixel-level loss function. The computer device determines, by using the pixel-level loss function, corresponding loss values of the first image and the second image in the second-type area, and finally obtains the second loss value by performing weighted summation on the loss values.

Implementation 2

In this implementation, the loss values of different areas determined by the computer device include a first loss value and a third loss value. The computer device determines, based on the partition indication map and according to a first loss function, a loss value of a first-type area in the second image relative to a first-type area in the first image, to obtain the first loss value. The computer device determines, according to a third loss function, a loss value of the second image relative to the first image, to obtain the third loss value. In other words, the computer device separately determines a loss value of the first-type area and loss values of all areas. When the partition indication map is the image gradient map, the computer device separately determines a loss value of the structured area and loss values of all the areas. When the partition indication map is the image segmentation mask map, the computer device separately determines a loss value of the area in which the target object is located and loss values of all the areas.

It should be noted that an implementation process in which the computer device determines the first-type area is similar to corresponding content in the foregoing implementation 1. For details, refer to related descriptions in the foregoing implementation 1. Details are not described herein again. The following describes an implementation process in which the computer device determines the loss values of all the areas.

Optionally, the third loss function represents a loss function set, and the loss function set includes at least one loss function. For example, the third loss function includes at least one of an MS-SSIM loss function, a perceptual loss function, and a generative adversarial loss function. In other words, the third loss function includes a loss function focusing on assessing reconstruction quality of a texture. For another example, the third loss function includes an L1 loss function, an L2 loss function, and the like, and the third loss function further includes at least one of an MS-SSIM loss function, a perceptual loss function, a generative adversarial loss function, and the like. In other words, the third loss function includes both a loss function focusing on assessing reconstruction quality of an edge structure and a loss function focusing on assessing reconstruction quality of a texture.

In this embodiment of this application, if the third loss function includes at least one of the MS-SSIM loss function, the perceptual loss function, and the generative adversarial loss function, that is, includes a non-pixel-level loss function, an implementation process in which the computer device determines the third loss value has a principle similar to the foregoing principle of determining the second loss value, with a difference only in that the processed images are different. Details are not described herein again. If the third loss function further includes a pixel-level loss function such as the L1 loss function and/or the L2 loss function, the computer device further needs to calculate pixel-level loss values of all the areas based on the first image and the second image, and finally weights various loss values (including a pixel-level loss value and a non-pixel-level loss value) to obtain the third loss value.

For example, assuming that the first loss function includes the L1 loss function, and the third loss function includes the L1 loss function, an LPIPS loss function, and a GAN loss function, the computer device essentially calculates an additional L1 loss value for the first-type area in addition to calculating an L1 loss value, an LPIPS loss value, and a GAN loss value of all the areas, to impose an additional loss restriction on the first-type area.

The foregoing describes the determining, by the computer device based on the partition indication map of the first image and according to different loss functions, loss values of different areas in the second image relative to the first image. Optionally, the computer device can also determine, based on the partition indication map of the first image and according to one loss function, the loss values of different areas in the second image relative to the first image. For example, the computer device determines, according to the L1 loss function, a loss value of the second image in the first-type area relative to the first image, and further determines, according to the L1 loss function, a loss value of the second image in the second-type area relative to the first image. Alternatively, the computer device makes the first-type area in the first image to be consistent with the first-type area in the second image through area replacement, determines, according to the GAN loss function, a loss value, in the second-type area relative to the first image, of the second image after area replacement, makes the second-type area in the first image to be consistent with the second-type area in the second image through area replacement, and determines, according to the GAN loss function, a loss value, in the first-type area relative to the first image, of the second image after area replacement. Optionally, in some embodiments, the computer device determines the first loss value, the second loss value, and the third loss value, and subsequently determines a total loss value based on the first loss value, the second loss value, and the third loss value in step 404.

It should be noted that, in an implementation in which the partition indication map is the image gradient map, the foregoing embodiment is described by using an example in which the image gradient map indicates a structured area and an unstructured area. In other words, the image gradient map indicates two types of areas. In some other embodiments, more types of areas may also be indicated by using an image gradient map that is not represented through binarization, so that a proper loss function is used to calculate a loss value for different types of areas. For example, an area, in the image gradient map, in which gradient value is within a first range indicates the first-type area; an area, in the image gradient map, in which gradient value is within a second range indicates the second-type area; and an area, in the image gradient map, in which gradient value is within a third range indicates a third-type area. Optionally, the first range, the second range, and the third range are consecutive and do not overlap, or the first range, the second range, and the third range are allowed to overlap.

Step **404**: Determine, based on the loss values of the different areas, a total loss value of the second image relative to the first image.

In this embodiment of this application, after determining the loss values of the different areas, the computer device determines, based on the loss values of the different areas, the total loss value of the second image relative to the first image.

For example, the computer device performs weighted summation on the loss values of the different areas based on at least two weights, to obtain the total loss value. When the loss values of the different areas are determined according to one loss function, the at least two weights are different. In other words, if the loss values of the different areas are all determined according to a same loss function, in order that the loss values of the different areas have better binding force on the corresponding areas or have better assessment effects, the computer device needs to weight different loss values by using different weights. When the loss values of the different areas are determined according to at least two loss functions, the at least two weights are different or the same. In other words, if the loss values of the different areas are determined according to different loss functions, because different loss functions have different effects, the computer device does not need to limit weights to be different.

It should be noted that, in the foregoing step 403, the first loss function, the second loss function, and the third loss function each may include a plurality of loss functions. In this case, the computer device performs weighted summation on loss values determined according to the loss functions included in the first loss function, to obtain the first loss value, performs weighted summation on loss values determined according to the loss functions included in the second loss function, to obtain the second loss value, and performs weighted summation on loss values determined according to the loss functions included in the third loss function, to obtain the third loss value. Alternatively, the computer device does not perform the weighting operation in step 403, and perform all weighting operations in step 404.

For example, all weighting operations are performed in step 404. It is assumed that the loss values of the different areas are determined by using the first loss function and the third loss function, the first loss function includes the L1 loss function, and the third loss function includes the L1 loss function, the LPIPS loss function, and the GAN loss function. In this case, the computer device determines the total loss value of the second image relative to the first image by using the following formula (5):

$$L_{img} = \alpha_1 * L_{1mask} + \alpha_2 * L_1 + \beta * L_{LPIPS} + \gamma * L_{GAN} \tag{5}$$

In formula (5), $L_{img}$ represents the total loss value, $L_{1mask}$ represents an L1 loss value of the second image in the first-type area relative to the first image, $L_1$, $L_{LPIPS}$, and $L_{GAN}$ respectively represent an L1 loss value, an LPIPS loss value, a GAN loss value of the second image in all the areas relative to the first image, and $\alpha_1$, $\alpha_2$, $\beta$, and $\gamma$ represents weights.

In addition to determining the total loss value through weighted summation, the computer device may also determine the total loss value through exponential weighting and multiplication, or may determine the total loss value in another weighting manner. This is not limited in this embodiment of this application.

The loss values described above are all used to measure a distortion loss (including a pixel-level loss, a perception loss, and the like) of an image, that is, the determined total loss value includes a distortion loss value. Optionally, in addition to the distortion loss value, the total loss value further includes a rate loss value. The rate loss value is used to measure a compression bit rate of an image, that is, a coding bit rate. There are many methods for determining the rate loss value. For details, refer to a conventional technology, and details are not described herein. Optionally, the total loss value is obtained by performing weighted summation on the distortion loss value and the rate loss value, to balance the distortion loss and a rate loss.

The foregoing describes the determining, by the computer device based on the partition indication map, the total loss value of the reconstructed second image relative to the first image before compression. It can be learned from the foregoing that the total loss value can be used to optimize the image encoding and decoding network, and can also be used as an assessment metric of image reconstruction quality. The following describes an implementation in which the computer device optimizes the image encoding and decoding network based on the total loss value.

It can be learned from the foregoing that, in implementation 1, the computer device determines the total loss value by separately determining the loss value of the first-type area and the loss value of the second-type area. In implementation 2, the computer device determines the total loss value by separately determining the loss value of the first-type area and the loss values of all the areas. It can be learned that in the foregoing implementation 1, in a process of determining the total loss value, the computer device has restricted the first-type area and the second-type area by using the first loss function and the second loss function, respectively. Then, the computer device can directly determine a first gradient optimization map based on the total loss value, and update a network parameter of the image encoding and decoding network based on the first gradient optimization map, thereby optimizing the image encoding and decoding network. In this way, an optimization effect of the first loss function is reflected in the first-type area, and an optimization effect of the second loss function is reflected in the second-type area, so that an optimized image encoding and decoding network can improve reconstruction quality of an edge structure, and can also improve reconstruction quality of a texture. In other words, overall performance of the image encoding and decoding network is improved, and image reconstruction quality is more consistent with subjective perception of human eyes.

However, in the foregoing implementation 2, in a process of determining the total loss value, the computer device restricts only the first-type area by using the first loss function, and the loss value calculated based on the third loss function is not only for the second-type area. Therefore, if the third loss function is expected to be used to optimize reconstruction quality of the second-type area, that is, the third loss function acts only on the second-type area, after determining the first gradient optimization map based on the total loss value, the computer device needs to perform gradient blocking on the first-type area in the first gradient optimization map based on the partition indication map of the first image, to obtain a second gradient optimization map. Then, the computer device updates, based on the second gradient optimization map, the network parameter of the image encoding and decoding network. In other words, gradient backpropagation of the first-type area is blocked, so that the third loss function acts only on the second-type area.

Optionally, a process in which the computer device performs gradient blocking is: setting, based on the partition indication map of the first image, gradient values of the first-type area in the first gradient optimization map to zero, to obtain the second gradient optimization map. In other words, the computer device can block gradient backpropagation at some positions through zero resetting. It should be noted that a size of the first gradient optimization map is consistent with the size of the first image, and the first gradient optimization map is obtained by performing derivation on an optimization function of the image encoding and decoding network. The optimization function of the image encoding and decoding network may include any one or more loss functions described in this specification. This is not limited in this embodiment of this application.

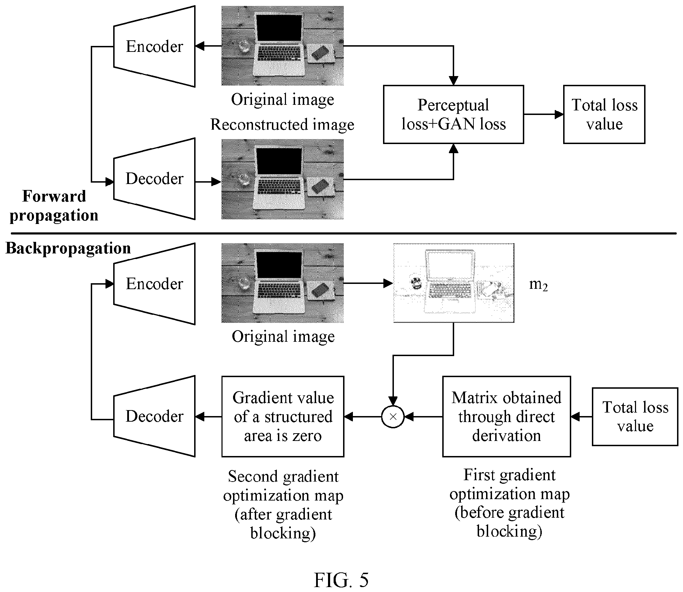

FIG. 5 is a system architectural diagram of a method for optimizing an image encoding and decoding network according to an embodiment of this application. For example, a partition indication map is an image gradient map. Refer to FIG. 5. An optimization process of an image encoding and decoding network includes a forward propagation process and a backpropagation process. In the forward propagation process, an original image sequentially passes through an encoder (namely, an encoding network) and a decoder (namely, a decoding network) included in the to-be-optimized image encoding and decoding network, to obtain a reconstructed image, and then a loss value of the reconstructed image relative to the original image is determined by using a perceptual loss function and a GAN loss function. Optionally, a pixel-level loss function is used to determine a loss value for a structured area. A total loss value is obtained by performing weighted summation on all loss values. In the backpropagation process, a first gradient optimization map, namely, a gradient optimization map before gradient blocking, is determined based on the total loss value, where the first gradient optimization map is a matrix obtained by directly performing derivation. Point multiplication is performed on $mask_2$ and the first gradient optimization map, to obtain a second gradient optimization map, namely, a gradient optimization map obtained after gradient blocking. A gradient value of a structured area in the second gradient optimization map is zero. Based on the second gradient optimization map, a network parameter of the image encoding and decoding network is updated through gradient backpropagation, to optimize the image encoding and decoding network.

In FIG. 5, an image gradient map $mask_1$ is represented by mi, $mask_2$ is represented by $m_2$, and $mask_2$ is a gradient map obtained by inverting the image gradient map $mask_1$ represented by a gradient mask. In $mask_2$, a gradient mask of a black area is 0, and the black area corresponds to an area with a large grayscale value change in the original image, that is, a structured area. In $mask_2$, a gradient mask of a white area is 1, and the white area corresponds to an area with a small grayscale value change in the original image, that is, an unstructured area.

It should be noted that, it can be learned from the foregoing that if it is determined in this solution that a loss value is used to optimize the image encoding and decoding network, a first image is any image sample in a plurality of image samples included in a training dataset. The computer device optimizes the image encoding and decoding network based on the training dataset in a manner of iteratively updating the network parameter. For another image sample other than the first image in the training dataset, the computer device processes the another image sample in a same manner as processing the first image. In this way, a plurality of total loss values that are in a one-to-one correspondence with the plurality of image samples can be determined based on the training dataset, and the computer device iteratively updates the network parameter of the image encoding and decoding network based on the plurality of total loss values, so that the image encoding and decoding network is optimized. Optionally, the computer device updates the network parameter once each time the computer device determines a total loss value based on one image sample, or the computer device updates the network parameter once each time the computer device determines a batch of total loss values based on a batch of image samples. The batch of image samples is one of a plurality of groups of image samples included in the training dataset.

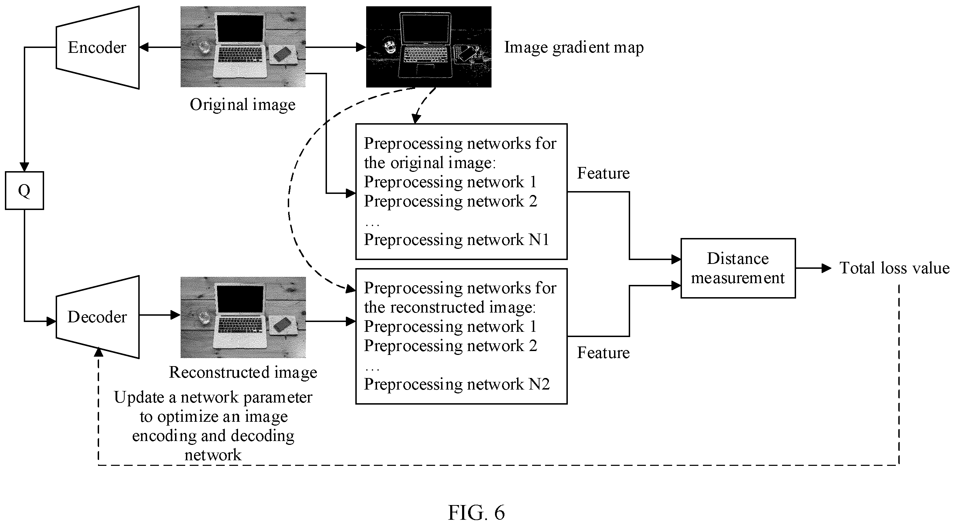

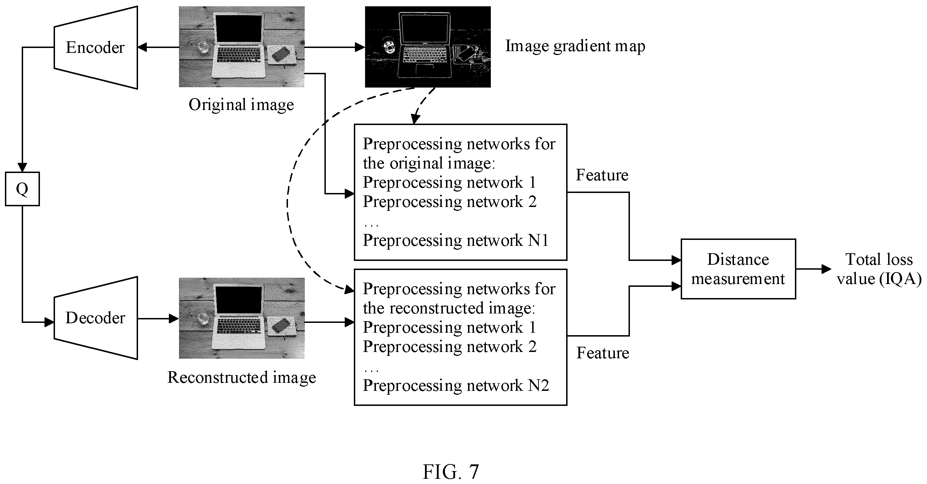

It can be learned from the foregoing that embodiments of this application not only provide the method for determining an image loss value, but also provide the method for optimizing an image encoding and decoding network, and further provide a method for assessing image quality (IQA). FIG. 6 and FIG. 7 respectively show flowcharts of a method for optimizing an image encoding and decoding network and a method for assessing image quality. In FIG. 6 and FIG. 7, an example in which an image gradient map is used to indicate a structured area and an unstructured area is used for description. A difference between FIG. 7 and FIG. 6 lies in that, in FIG. 6, a total loss value is determined to optimize an image encoding and decoding network, and in FIG. 7, a total loss value is determined to assess image quality.

The network optimization method based on an image gradient shown in FIG. 6 includes the following steps:

1. An original image is input into the image encoding and decoding network to output a reconstructed image.

2. An image gradient map is extracted from the original image. Optionally, the image gradient map is represented by a gradient mask.

3. The original image is separately input into N1 preprocessing networks, and the reconstructed image is separately input into N2 preprocessing networks. The N1 preprocessing networks are in a one-to-one correspondence with the N2 preprocessing networks, and N1 is equal to N2, or N1 may not be equal to N2. Different preprocessing networks correspond to different loss functions. Based on guidance of the image gradient map, different preprocessing networks are used for different areas of the original image and the reconstructed image. In some preprocessing networks (such as a VGG network and a GAN network), features are extracted from the original image and the reconstructed image (or a reconstructed image obtained after truth value replacement), so that a non-pixel-level loss value is subsequently calculated based on the features. In some other preprocessing networks, the images are not processed, that is, an output is equal to the input, that is, the images themselves are features, so that a pixel-level loss value is subsequently directly calculated.

4. According to guidance of the gradient mask, distance measurement (for example, L1 or L2 measurement) is performed on the features extracted by the some preprocessing networks, to obtain a non-pixel-level loss value of an unstructured area or non-pixel-level loss values of all areas; and distance measurement (for example, L1 or L2 measurement) is used for output of the other preprocessing networks, to obtain a pixel-level loss value of a structured area.

5. Different loss values are weighted to form a total loss value.

6. Based on the total loss value, a network parameter of the image encoding and decoding network is updated by using a specific optimization method.

Effects of different loss functions are reflected in different preprocessing networks, and are reflected in different distance measurement manners. It can be learned from the procedure shown in FIG. 6 that, in this solution, different loss functions are used at different spatial domain positions. This meets different requirements of different areas for quality of the reconstructed image, and improves quality of the reconstructed image.

The following describes the foregoing content again by using some examples.

Example 1: A method for optimizing an image encoding and decoding network based on an image gradient

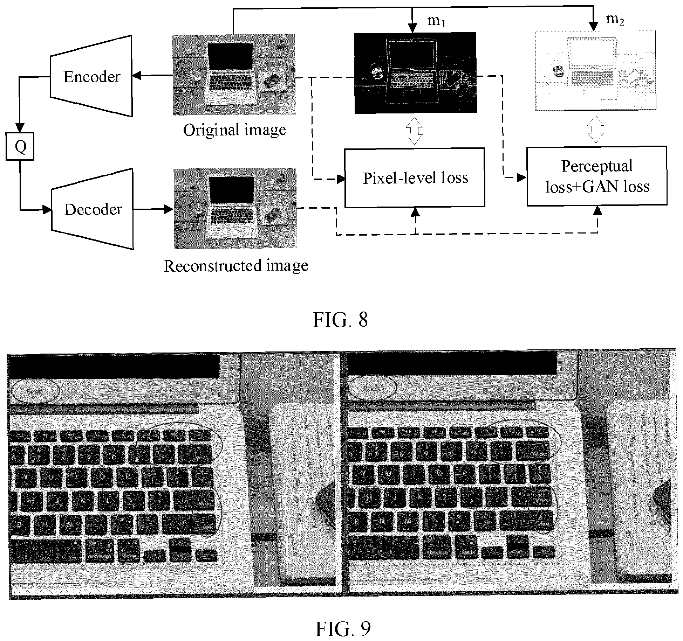

FIG. 8 is a diagram of a system architecture of another method for optimizing an image encoding and decoding network according to an embodiment of this application. Refer to FIG. 8. The optimization method includes the following steps:

1. An original image x (for example, a first image) is input into the image encoding and decoding network, to encode the original image by using an encoder, and transmit an image bitstream to a decoder side through quantization (Q in the figure includes quantization) and transmission (omitted in the figure). The decoder side dequantizes the image bitstream (Q in the figure further includes dequantization), and obtains a reconstructed image $\hat{x}$ (for example, a second image) through decoding.

2. An image gradient map is extracted from the original image x by using a Laplacian operator. The extracted image gradient map is represented by a floating point number. Then, binarization processing is performed on the extracted image gradient map by using a binary threshold (for example, 10). An image gradient map $mask_1$ (namely, $m_1$ in the figure) represented by a gradient mask is obtained through expansion and cluttered area removal, where $mask_1$ is a gradient map with a relatively large quantity of black areas shown in FIG. 8. A gradient mask of the black area in $mask_1$ is 0. The black areas correspond to areas with a small grayscale value change in the original image, namely, lightly-structured areas, that is, unstructured areas. A gradient mask of the white area in $mask_1$ is 1. The white areas correspond to areas with a large grayscale value change in the original image, namely, heavily-structured areas, that is, structured areas. Optionally, a $mask_2$ (namely, $m_2$ in the figure) is obtained through gradient inversion, and $mask_2$ is a gradient map with a relatively large quantity of white areas shown in FIG. 8.

3. An L1 loss function (a pixel-level loss function) is used to calculate a loss value $L_{1mask_1}(x,\hat{x})$ in the structured area for the original image and the reconstructed image. Through true value replacement, an LPIPS loss function (a perceptual loss function) and a GAN loss function are respectively used in the unstructured area in the original image and the reconstructed image, to calculate loss values $L_{LPIPS}(x,\hat{x}_{rep})$ and $L_{GAN}(x,\hat{x}_{rep})$. True value replacement is shown in the foregoing formula (4).

4. A total loss value $L_{total}$ is formed by a weighted sum of loss values of different areas, as shown in the following formula (6), where $L_{rate}$ represents a rate loss value, and $\alpha$, $\beta$, and $\gamma$ represent weights.

$$L_{total} = L_{rate} + \alpha^* L_{1mask_1}(x,\hat{x}) + \beta^* L_{LPIPS}(x,\hat{x}_{rep}) + \gamma^* L_{GAN}(x,\hat{x}_{rep}) \qquad (6)$$

5. A first gradient optimization map is determined based on the total loss value, and the image encoding and decoding network is optimized based on the first gradient optimization map by using an optimization method.

Optionally, the foregoing step 3 to step 5 correspond to a truth value replacement solution, and the truth value replacement solution may be replaced with a gradient blocking solution corresponding to the following step 3' to step 5'.

3'. A pixel-level loss function is used to calculate a loss value in the structured area for the original image and the reconstructed image, and a perceptual loss function and a GAN loss function are used to calculate a loss value in all areas for the original image and the reconstructed image.

4'. The total loss value is formed by a weighted sum of all loss values of different areas.

5'. The first gradient optimization map is determined based on the total loss value, and gradient blocking is performed on a structured area of the first gradient optimization map based on the image gradient map, to obtain a second gradient optimization map, so as to block gradient backpropagation of the structured area in a process of optimizing the image encoding and decoding network based on the second gradient optimization map, so that the perceptual loss function and the GAN loss function act on the unstructured area.

It can be learned from the foregoing that, in example 1, based on the image gradient map, optimization is performed for the structured area by using the pixel-level loss function, and optimization is performed for the unstructured area by using the perceptual loss function and the GAN loss function. In other words, the image encoding and decoding network is optimized for the structured area and the unstructured area respectively, so that an optimized image encoding and decoding network can output a reconstructed image with a better texture and a maximally non-distorted edge structure.

FIG. 9 is a diagram of effect comparison between a group of images according to an embodiment of this application. In FIG. 9, the left side corresponds to a solution in which only a perceptual loss is used and a loss value is calculated for all areas to optimize an image encoding and decoding network, and the right side corresponds to the solution in the foregoing example 1 in which the image encoding and decoding network is optimized. Two images are reconstructed images at a same bit rate of 0.13 bpp. It can be seen from parts circled by ellipses in FIG. 9 that, text on the keyboard or the like in the reconstructed image on the left side is obviously distorted, and a text structure on the keyboard or the like in the reconstructed image on the right side is not obviously distorted. Therefore, an optimization effect of this solution is better.

In this example, different areas include a structured area and an unstructured area.

Example 2: Another method for optimizing an image encoding and decoding network based on an image gradient

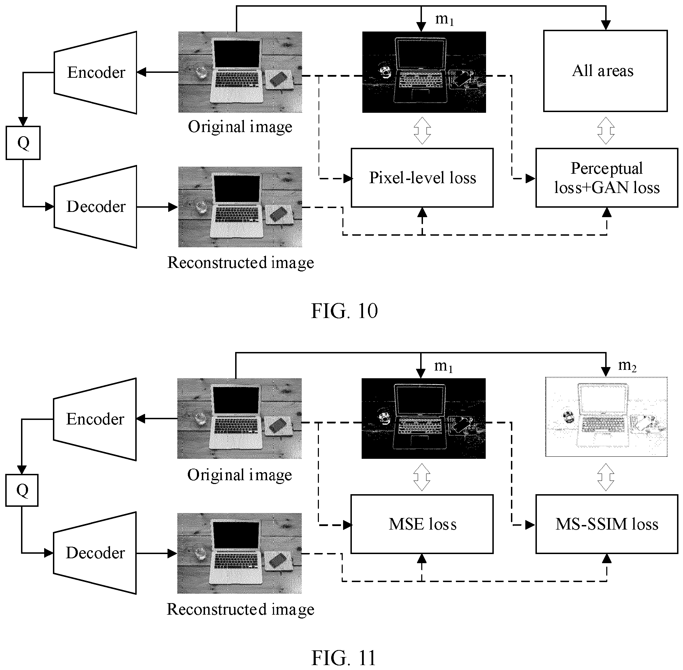

FIG. 10 is a diagram of a system architecture of still another method for optimizing an image encoding and decoding network according to an embodiment of this application. Refer to FIG. 10. In the optimization method, based on an image gradient map $mask_1$ (namely, $m_1$ in the figure), an L1 loss function (a pixel-level loss function) is used to determine a loss value $L_{1mask_1}(x,\hat{x})$ for a structured area, and the L1 loss function, an LPIPS loss function, and a GAN loss function are used to determine loss values $L_1(x,\hat{x})$, $L_{LPIPS}(x,\hat{x})$, and $L_{GAN}(x,\hat{x})$ for all areas. A total loss value $L_{total}$ is formed by a weighted sum of loss values, as shown in the following formula (7). Then, a first gradient optimization map is determined based on the total loss value, and the image encoding and decoding network is optimized based on the first gradient optimization map.

$$L_{total} = L_{rate} + \alpha * L_{1(1+mask_1)}(x,\hat{x}) + \beta * L_{LPIPS}(x,\hat{x}) + \gamma * L_{GAN}(x,\hat{x}) \tag{7},$$

where

$L_{rate}$ represents a rate loss value, $\alpha$, $\beta$, and $\gamma$ represent weights, and $L_{1(1+mask_1)}(x,\hat{x})$ represents ($L_{1mask_1}(x,\hat{x}) + L_1(x,\hat{x})$).

It can be learned from the foregoing that, in addition to calculating loss values (including a perceptual loss value) for all areas, the optimization method in example 2 further includes calculating an L1 loss value for a structured area. In this way, when the image encoding and decoding network is optimized, bit rate allocation for an edge area can be increased by increasing an L1 loss weight of the edge area, while ensuring perceptual coding quality, so that a reconstruction effect of the structured area is improved.

Example 3: Still another method for optimizing an image encoding and decoding network based on an image gradient

FIG. 11 is a diagram of a system architecture of yet another method for optimizing an image encoding and decoding network according to an embodiment of this application. Refer to FIG. 11. In the optimization method, based on an image gradient map $mask_1$ (namely, $m_1$ in the figure), an L2 loss function (namely, an MSE loss function) is used to determine a loss value $L_{MSE\,mask_1}(x,\hat{x})$ for a structured area. Through true value replacement, an MS-SSIM loss function is used to determine a loss value $L_{MSSSIM}(x,\hat{x}_{rep})$ for an unstructured area. A total loss value $L_{total}$ is formed by a weighted sum of loss values, as shown in the following formula (8). Then, a first gradient optimization map is determined based on the total loss value, and the image encoding and decoding network is optimized based on the first gradient optimization map.

$$L_{total} = L_{rate} + \alpha * L_{MSE\,mask_1}(x,\hat{x}) + \beta * L_{MSSSIM}(x,\hat{x}_{rep}) \tag{8},$$

where

$L_{rate}$ represents a rate loss value, and $\alpha$, and $\beta$ represent weights.

Alternatively, in the optimization method shown in FIG. 11, based on the image gradient map $mask_1$, the loss value $L_{MSE\,mask_1}(x,\hat{x})$ is determined by using the MSE loss function for the structured area. The MS-SSIM loss function is used to determine a loss value $L_{MSSSIM}(x,\hat{x})$ for all areas. The total loss value $L_{total}$ is formed by a weighted sum of loss values, including a weighted rate loss value. The first gradient optimization map is then determined based on the total loss value. Gradient blocking is performed on the first gradient optimization map based on the image gradient map $mask_1$, to obtain a second gradient optimization map. The image encoding and decoding network is optimized based on the second gradient optimization map.

It can be learned from the foregoing that, in example 3, based on the image gradient map, a heavily-structured edge structure area is optimized by using the MSE loss function, and another area is optimized by using the MS-SSIM loss function. This combines an advantage of the MSE loss function of well retaining structure information and an advantage of the MS-SSIM loss function of reconstructing an image that is subjectively well-received. In addition, compared with the foregoing example 1, in example 3, a perceptual loss function and a GAN loss function are not used, but the MS-SSIM loss function is used, so that better performance is achieved in terms of the objective metric MS-SSIM.

Compared with a solution in which all areas are directly optimized by using only the MSE loss function, the optimization method in example 3 can make a reconstructed image more consistent with subjective perception of human eyes. Compared with a solution in which all areas are directly optimized by using only the MS-SSIM loss function, or a solution in which optimization is performed by using MSE and MS-SSIM to perform loss weighting in all areas, the optimization method in example 3 is better in reconstructing a structured area.

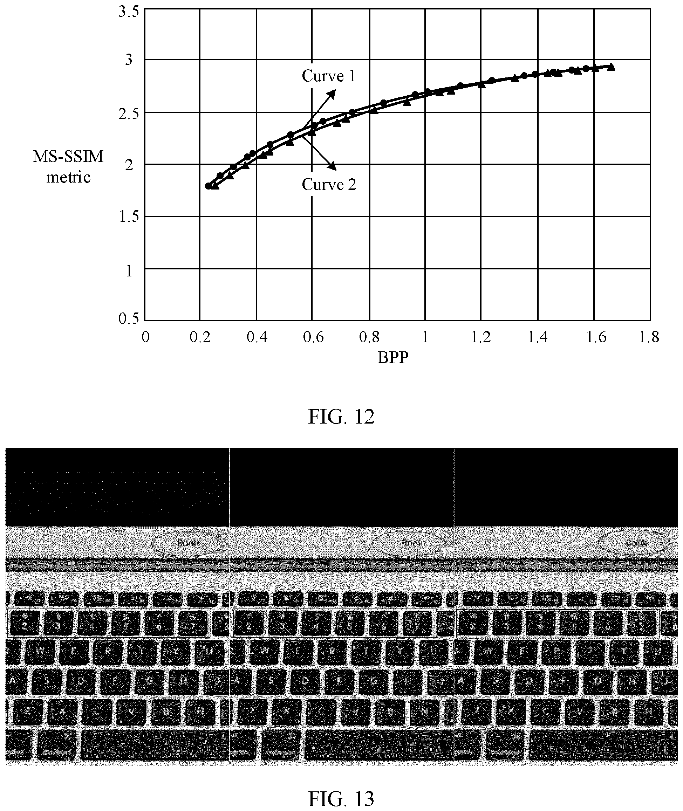

FIG. 12 is a comparison diagram of optimization effects in terms of objective metrics according to an embodiment of this application. In FIG. 12, a curve 1 corresponds to the solution in which all the areas are directly optimized by using only the MS-SSIM loss function, and a curve 2 corresponds to the solution in example 3. In FIG. 12, a horizontal coordinate represents a quantity of bits per pixel BPP, and a higher BPP indicates a higher compression bit rate. In FIG. 12, a vertical coordinate represents a value of an MS-SSIM metric. A larger value of the metric indicates better objective assessment of a reconstructed image. It can be learned that the solution in example 3 of this application causes only a slight decrease in the objective metric MS-SSIM, and such decrease can be ignored. In other words, the solution in example 3 improves reconstruction quality of a structured area, so that a reconstructed image better meets subjective perception of human eyes, and can further ensure that the objective metric does not deteriorate significantly.

FIG. 13 is a diagram of effect comparison between another group of images according to an embodiment of this application. In FIG. 13, a right image corresponds to a solution in which only an MS-SSIM loss is used and a loss value is calculated for all areas, to optimize an image encoding and decoding network; a middle image corresponds to a solution in which an MSE loss and an MS-SSIM loss are used and weighted calculation is performed to calculate a loss value for any area, to optimize the image encoding and decoding network; and a left image corresponds to a solution in the foregoing example 3 in which the image encoding and decoding network is optimized. The three images are reconstructed images at a same bit rate of 0.38 bpp. It can be seen from parts circled by ellipses in FIG. 13 that, text on the keyboard or the like in the reconstructed image on the right side and the middle is obviously distorted to different degrees, and a text structure on the keyboard or the like in the reconstructed image on the left side is not obviously distorted. Therefore, an optimization effect of this solution is better.

Example 4: Image quality assessment (IQA) method based on an image gradient

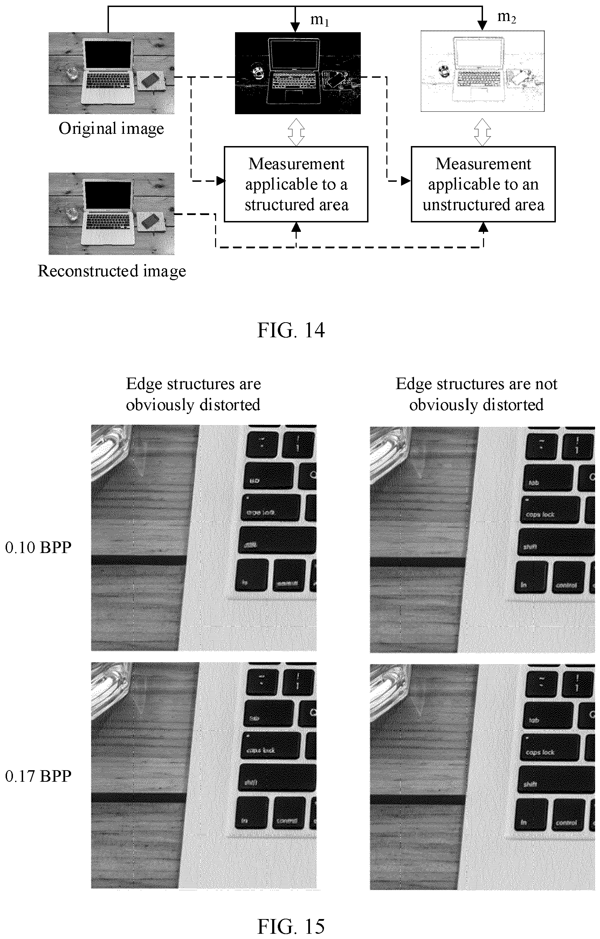

FIG. 14 is a diagram of a system framework of an image quality assessment method according to an embodiment of this application. Refer to FIG. 14. Based on an image gradient map, a loss value is determined for a structured area by using at least one loss function applicable to the area, for example, an L1 loss function and/or an MSE loss function. A loss value is determined for an unstructured area by using at least one loss function applicable to the area, for example, at least one of an MS-SSIM loss function, an LPIPS loss function, and a GAN loss function. In other words, a measure applicable to the structured area is used to measure a similarity between a reconstructed image and an original image, and a measure applicable to the unstructured area is used to measure the similarity between the reconstructed image and the original image. Then, a loss value of the structured area and a loss value of the unstructured area are weighted to obtain a metric value of image quality assessment. In FIG. 14, $m_1$ and $m_2$ represent $mask_1$ and $mask_2$ respectively.

For example, as shown in the following formula (9), the MSE loss function is used to determine a loss value $L_{MSE\ mask_1}(x,\hat{x})$ for the structured area, and the MS-SSIM loss function and the LPIPS loss function are used to respectively determine loss values $L_{MSSSIM}(x,\hat{x}_{rep})$ and $L_{LPIPS}(x,\hat{x}_{rep})$ for the unstructured area through true value replacement. Finally, weighted summation is performed on the three loss values to obtain an image quality assessment metric value *IQA*. It should be noted that, that weights of the three loss values are respectively 1, 0.5, and 0.5 is used as an example in formula (9). However, the weights are not used to limit this embodiment of this application.

$$IQA = L_{MSE\ mask_1}(x,\hat{x}) + 0.5 * L_{MSSSIM}(x,\hat{x}_{rep}) + 0.5 * L_{LPIPS}(x,\hat{x}_{rep}) \qquad (9)$$

Table 1 is a table of performance comparison between different IQA solutions according to this embodiment of this application. Table 1 is used to indicate that the image quality assessment method in this solution is more consistent with subjective perception of human eyes, and has higher sensitivity, that is, can more accurately assess image reconstruction quality. Refer to FIG. 15 for understanding of Table 1. FIG. 15 shows four images of four qualities according to an embodiment of this application. The four images may be images reconstructed by using an image encoding and decoding network optimized with different solutions. Among the four images, the upper two images correspond to 0.10 BPP, the lower two images correspond to 0.17 BPP, edge structures of the two images on the left are obviously distorted, for example, text on the keyboard is distorted, and edge structures of the two images on the right are not obviously distorted. When the four images are observed with human eyes, subjective perception of the four images is that image quality of the lower right image, the upper right image, the lower left image, and the upper left image decreases sequentially.

**Table 1**

|  | MS-SSIM solution | | LPIPS solution | | Solution in example 4 | |
|---|---|---|---|---|---|---|
|  | no_edge | edge | no_edge | edge | no_edge | edge |
| 0.10 BPP | 0.24% | 0.00% | 8.61% | 0.00% | **-13.16%** | 0.00% |
| 0.17 BPP | **-0.25%** | **1.74%** | 10.19% | **21.79%** | -4.18% | **32.72%** |

Performance results of the three IQA solutions are shown in Table 1. The MS-SSIM solution is an IQA solution in which only the MS-SSIM loss function is used to directly calculate loss values of all areas. The LPIPS solution is an IQA solution in which only the LPIPS loss function is used to directly calculate loss values of all the areas. The solution in example 4 is an IQA solution provided in this embodiment of this application. A large quantity of images of four qualities similar to those shown in FIG. 15 are separately assessed by using the three solutions, and assessment results of the solutions on the images of the four qualities can be obtained. A table of performance comparison shown in Table 1 may be obtained by separately comparing assessment results of the three solutions with assessment results of subjective perception of human eyes. In Table 1, 0.00% represents a reference of the image quality of the upper right image in FIG. 15. If an assessment result of the IQA solution considers that image quality is better than that of the upper right image, a corresponding cell in Table 1 is entered with a positive number. If an assessment result of the IQA solution considers that image quality is lower than that of the upper right image, a corresponding cell in Table 1 is entered with a negative number. In Table 1, bold fonts are used to indicate that the quality is consistent with subjective perception of human eyes. It can be learned that assessment results of the four qualities of the solution in example 4 are consistent with subjective perception of human eyes.

It can be learned from example 4 that, in an IQA method in a conventional technology, a same manner is used for all areas of an image, that is, all the areas of the image are assessed by using a same metric. In this embodiment of this application, a measurement manner that can better reflect structure information fidelity is used for a structured area in an image, and for another area, a measurement manner that is more suitable for the area is used, to comprehensively assess image quality.

Example 5: A method for optimizing an image encoding and decoding network based on image segmentation (or target detection)

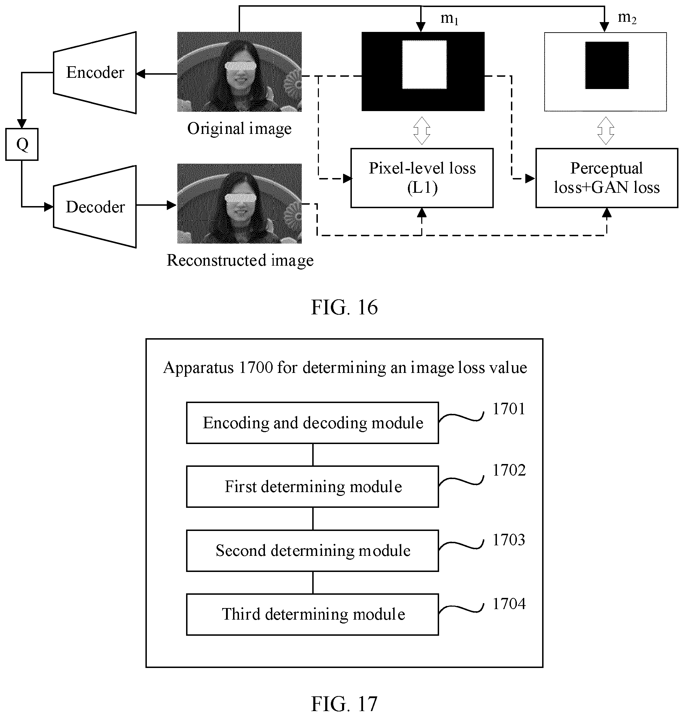

FIG. 16 is a diagram of a system architecture of still yet another method for optimizing an image encoding and decoding network according to an embodiment of this application. Refer to FIG. 16. The optimization method includes the following steps:

1. An original image x (for example, a first image including a face, where the face is partially blocked in the image) is input into an image encoding and decoding network, so that the original image is encoded by using an encoder, and an image bit stream is transmitted to a decoder side through quantization and transmission. The decoder side dequantizes the image bit stream, and decodes the image bit stream to obtain a reconstructed image $\hat{x}$ (for example, a second image including the face).

2. A face detection model is used to perform face detection on the original image x to obtain an image segmentation mask map, namely, a mask map $mask_1$ (namely, $m_1$ in the image) that can identify a face area. A face area in the original image may also be manually marked to obtain $mask_1$. In $mask_1$, a mask of a black area is 0. The black area corresponds to the face area in the original image, and the face area is an area with strong structure information. In $mask_1$, a mask of a white area is 1. The white area corresponds to a non-face area in the original image, and the non-face area is an area with weak structure information. $Mask_2$ (namely, $m_2$ in the figure) is obtained by inverting $mask_1$.

3. An L1 loss function (a pixel-level loss function) is used to calculate a pixel-level loss value in the face area for the original image and the reconstructed image. Through true value replacement, a perceptual loss function (for example, an LPIPS loss function) and a GAN loss function are respectively used to calculate a non-pixel-level loss value in a non-face area for the original image and the reconstructed image.

4. A total loss value is formed by a weighted sum of loss values of different areas.

5. A first gradient optimization map is determined based on the total loss value, and the image encoding and decoding network is optimized based on the first gradient optimization map by using an optimization method.

It can be learned from example 5 that different areas of the image are segmented based on face detection. A pixel-level loss function is used for optimization for the face area, and the perceptual loss function and the GAN loss function are used for optimization for the non-face area, so that an optimized image encoding and decoding network can output a reconstructed image with a better background texture and maximally little distortion in a face structure.

It should be noted that original images used in FIG. 5 to FIG. 15 in this specification are all from a public dataset, and an image source link is:

https://data.vision.ee.ethz.ch/cvl/clic/professional_valid_2020.zip.

It can be learned from the foregoing that, in an image compression framework (for example, the foregoing example 1 and example 2) focusing on subjective perception, the network optimization method in this solution can ensure good reconstruction of a texture area for better subjective perception of human eyes, and can further reduce a loss of structure information. In an image compression framework (for example, the foregoing example 3) focusing on an objective metric, the network optimization method in this solution can significantly improve a reconstruction effect of an edge structure, thereby achieving a balance between the objective metric and subjective perception of human eyes. In addition, when this solution is used for image quality assessment, a provided assessment result is more consistent with subjective perception of human eyes. In a solution in which at least two loss functions are used for optimization for different areas, various loss functions have restriction on each other. In this way, stability of training an image encoding and decoding network can be improved.

It should be noted that, the effect comparison diagrams shown in FIG. 9, FIG. 13, and FIG. 15 may suffer reduced definition due to document printing or scanning. Consequently, in some cases, effects of this solution may not be clearly learned from the accompanying drawings of the document. However, because the essence of this solution is to determine a loss with spatial adaptation, optimization effects of different areas can be maximally prevented from mutual restriction, so that image reconstruction quality is more comprehensively assessed, and a reconstructed image is more consistent with subjective perception of human eyes. Therefore, regardless of presence or absence of the effect comparison diagrams shown in FIG. 9, FIG. 13, and FIG. 15 in embodiments of this application, the foregoing technical effects can also be analyzed based on the technical solutions in embodiments of this application.

In addition, the original images, the reconstructed images, and the image gradient maps shown in FIG. 5 to FIG. 8, FIG. 11, FIG. 14, and FIG. 16 may also suffer reduced definition due to document printing or scanning. However, this does not affect essential content of the solution of optimizing an image encoding and decoding network provided in embodiments of this application.

In conclusion, in embodiments of this application, loss values of different areas in an image are determined based on a partition indication map of the image, and a total loss value is determined based on the loss values of the different areas. It can be learned that this solution is a loss determining solution with spatial adaption, for example, spatial adaption based on an image gradient or image segmentation (target detection). A heavily-structured area and a lightly-structured area in the image can be distinguished between by using the partition indication map, that is, the partition indication map can be used to distinguish between an edge structure and a texture. Therefore, when the total loss value is subsequently used to optimize the image encoding and decoding network, reconstruction quality of both the edge structure and the texture can be met, and optimization effects of different areas can be maximally prevented from mutual restriction. When the total loss value is used to assess image reconstruction quality, the image reconstruction quality can be assessed more comprehensively, and assessment of reconstruction quality of the edge structure and the texture can be maximally prevented from mutual impact.

FIG. 17 is a schematic diagram of a structure of an apparatus 1700 for determining an image loss value according to an embodiment of this application. The apparatus 1700 for determining an image loss value may be implemented as a part or all of a computer device by using software, hardware, or a combination thereof. The computer device may be the computer device in the foregoing embodiments. Refer to FIG. 17. The apparatus includes: an encoding and decoding module 1701, a first determining module 1702, a second determining module 1703, and a third determining module 1704.

The encoding and decoding module 1701 is configured to compress and decompress a first image by using an image encoding and decoding network, to obtain a second image, where the second image is a reconstructed image of the first image.

The first determining module 1702 is configured to determine a partition indication map of the first image.

The second determining module 1703 is configured to determine, based on the partition indication map and according to at least one loss function, loss values of different areas in the second image relative to the first image.

The third determining module 1704 is configured to determine, based on the loss values of the different areas, a total loss value of the second image relative to the first image.

Optionally, the loss values of the different areas include a first loss value and a second loss value.

The second determining module 1703 includes:

a first determining submodule, configured to determine, based on the partition indication map and according to a first loss function, a loss value of a first-type area in the second image relative to a first-type area in the first image, to obtain the first loss value; and

a second determining submodule, configured to determine, based on the partition indication map and according to a second loss function, a loss value of a second-type area in the second image relative to a second-type area in the first image, to obtain the second loss value.

Optionally, the second determining submodule is configured to:

replace the first-type area in the second image with the first-type area in the first image based on the partition indication map, to obtain a third image; and

determine, according to the second loss function, a loss value of the third image relative to the first image, to obtain the second loss value.

Optionally, the second determining submodule is configured to:

replace the first-type area in the first image with the first-type area in the second image based on the partition indication map, to obtain a fourth image; and

determine, according to the second loss function, a loss value of the second image relative to the fourth image, to obtain the second loss value.

Optionally, the second loss function includes at least one of a multi-scale structural similarity MS-SSIM loss function, a perceptual loss function, and a generative adversarial loss function.

Optionally, the apparatus 1700 further includes:

a fourth determining module, configured to determine a first gradient optimization map based on the total loss value; and

a first updating module, configured to update, based on the first gradient optimization map, a network parameter of the image encoding and decoding network.

Optionally, the loss values of the different areas include a first loss value and a third loss value.

The second determining module 1703 includes:

a first determining submodule, configured to determine, based on the partition indication map and according to a first loss function, a loss value of a first-type area in the second image relative to a first-type area in the first image, to obtain the first loss value; and

a third determining submodule, configured to determine, according to a third loss function, a loss value of the second image relative to the first image, to obtain the third loss value.

Optionally, the apparatus 1700 further includes:

a fourth determining module, configured to determine a first gradient optimization map based on the total loss value;

a gradient blocking module, configured to perform gradient blocking on a first-type area in the first gradient optimization map based on the partition indication map, to obtain a second gradient optimization map; and

a second updating module, configured to update, based on the second gradient optimization map, a network parameter of the image encoding and decoding network.

Optionally, the gradient blocking module includes:

a gradient blocking submodule, configured to set, based on the partition indication map, gradient values of the first-type area in the first gradient optimization map to zero, to obtain the second gradient optimization map.

Optionally, the third loss function includes an L1 loss function and/or an L2 loss function, and the third loss function further includes at least one of a multi-scale structural similarity MS-SSIM loss function, a perceptual loss function, and a generative adversarial loss function; or

the third loss function includes at least one of an MS-SSIM loss function, a perceptual loss function, and a generative adversarial loss function.

Optionally, the first loss function includes the L1 loss function and/or the L2 loss function.

Optionally, the first determining submodule is configured to:

determine, based on the partition indication map, an error of each pixel in the first-type area in the second image relative to a corresponding pixel in the first image; and

determine the first loss value based on the error of each pixel in the first-type area in the second image relative to the corresponding pixel in the first image.

Optionally, the third determining module 1704 includes:

a weighting submodule, configured to: perform weighted summation on the loss values of the different areas based on at least two weights, to obtain the total loss value, where when the loss values of the different areas are determined according to one loss function, the at least two weights are different; and when the loss values of the different areas are determined according to at least two loss functions, the at least two weights are different or the same.

Optionally, the partition indication map is an image gradient map, the first-type area includes a structured area, and the second-type area includes an unstructured area.

Optionally, the image gradient map is a gradient map represented by gradient masks, and the structured area corresponds to an area, in the image gradient map, in which a gradient mask is 1.

Optionally, the partition indication map is an image segmentation mask map, the first-type area includes an area in which a target object is located, and the second-type area includes an area in which a non-target object is located.

Optionally, the first-type area includes a face area of the target object.

In the embodiment of this application, loss values of different areas in an image are determined based on a partition indication map, and then a total loss value is determined based on the loss values of the different areas. It can be learned that this solution is a loss determining solution with spatial adaptation. A heavily-structured area and a lightly-structured area in the image can be distinguished between by using the partition indication map, that is, the partition indication map can be used to distinguish between an edge structure and a texture. Therefore, when the total loss value is subsequently used to optimize the image encoding and decoding network, reconstruction quality of both the edge structure and the texture can be met, and optimization effects of different areas can be maximally prevented from mutual restriction. When the total loss value is used to assess image reconstruction quality, the image reconstruction quality can be assessed more comprehensively, and assessment of reconstruction quality of the edge structure and the texture can be maximally prevented from mutual impact.

It should be noted that, when the apparatus for determining an image loss value provided in the foregoing embodiments determines an image loss value, division of the foregoing functional modules is merely used as an example for description. In actual application, the foregoing functions may be allocated to different functional modules for implementation as required, that is, an internal structure of the apparatus is divided into different functional modules, so as to implement all or some of the functions described above. In addition, the apparatus for determining an image loss value provided in the foregoing embodiments and the embodiments of the method for determining an image loss value pertain to a same idea. For a specific implementation process of the apparatus, refer to the method embodiments. Details are not described herein again.

All or some of the foregoing embodiments may be implemented by software, hardware, firmware, or any combination thereof. When the solutions are implemented by software, all or some of the solutions may be implemented in a form of a computer program product. The computer program product includes one or more computer instructions. When the computer instructions are loaded and executed on a computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that, the computer-readable storage medium mentioned in embodiments of this application may be a non-volatile storage medium, in other words, may be a non-transitory storage medium.

It should be understood that "at least one" mentioned in this specification means one or more and "a plurality of" means two or more. In the description of embodiments of this application, unless otherwise stated, "/" means "or", for example, A/B may represent A or B. The term "and/or" in this specification describes only an association relationship between associated objects, and indicates that three relationships may exist. For example, A and/or B may represent three cases: Only A exists, both A and B exist, and only B exists. In addition, to clearly describe the technical solutions in embodiments of this application, terms such as "first" and "second" are used in embodiments of this application for distinguishing between same items or similar items that have basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions. For example, the image in embodiments of this application is obtained under full authorization.

The foregoing descriptions are embodiments provided in this application, but are not intended to limit this application. Any modification, equivalent replacement, or improvement made without departing from the spirit and principle of this application should fall within the protection scope of this application.

**Claims**

1.  A method for determining an image loss value, wherein the method comprises:

    compressing and decompressing a first image by using an image encoding and decoding network, to obtain a second image, wherein the second image is a reconstructed image of the first image;
    determining a partition indication map of the first image;
    determining, based on the partition indication map and according to at least one loss function, loss values of different areas in the second image relative to the first image; and
    determining, based on the loss values of the different areas, a total loss value of the second image relative to the first image.

2.  The method according to claim 1, wherein the loss values of the different areas comprise a first loss value and a second loss value; and
    the determining, based on the partition indication map and according to at least one loss function, loss values of different areas in the second image relative to the first image comprises:

    determining, based on the partition indication map and according to a first loss function, a loss value of a first-type area in the second image relative to a first-type area in the first image, to obtain the first loss value; and
    determining, based on the partition indication map and according to a second loss function, a loss value of a second-type area in the second image relative to a second-type area in the first image, to obtain the second loss value.

3.  The method according to claim 2, wherein the determining, based on the partition indication map and according to a second loss function, a loss value of a second-type area in the second image relative to a second-type area in the first image, to obtain the second loss value comprises:

    replacing the first-type area in the second image with the first-type area in the first image based on the partition indication map, to obtain a third image; and
    determining, according to the second loss function, a loss value of the third image relative to the first image, to obtain the second loss value.

4.  The method according to claim 2, wherein the determining, based on the partition indication map and according to a second loss function, a loss value of a second-type area in the second image relative to a second-type area in the first image, to obtain the second loss value comprises:

    replacing the first-type area in the first image with the first-type area in the second image based on the partition indication map, to obtain a fourth image; and
    determining, according to the second loss function, a loss value of the second image relative to the fourth image, to obtain the second loss value.

5.  The method according to any one of claims 2 to 4, wherein the second loss function comprises at least one of a multi-scale structural similarity MS-SSIM loss function, a perceptual loss function, and a generative adversarial loss function.

6.  The method according to any one of claims 2 to 5, wherein after the determining, based on the loss values of the different areas, a total loss value of the second image relative to the first image, the method further comprises:

determining a first gradient optimization map based on the total loss value; and
updating, based on the first gradient optimization map, a network parameter of the image encoding and decoding network.

7. The method according to claim 1, wherein the loss values of the different areas comprise a first loss value and a third loss value; and
the determining, based on the partition indication map and according to at least one loss function, loss values of different areas in the second image relative to the first image comprises:

   determining, based on the partition indication map and according to a first loss function, a loss value of a first-type area in the second image relative to a first-type area in the first image, to obtain the first loss value; and
   determining, according to a third loss function, a loss value of the second image relative to the first image, to obtain the third loss value.

8. The method according to claim 7, wherein after the determining, based on the loss values of the different areas, a total loss value of the second image relative to the first image, the method further comprises:

   determining a first gradient optimization map based on the total loss value;
   performing gradient blocking on a first-type area in the first gradient optimization map based on the partition indication map, to obtain a second gradient optimization map; and
   updating, based on the second gradient optimization map, a network parameter of the image encoding and decoding network.

9. The method according to claim 8, wherein the performing gradient blocking on a first-type area in the first gradient optimization map based on the partition indication map, to obtain a second gradient optimization map comprises:
setting, based on the partition indication map, gradient values of the first-type area in the first gradient optimization map to zero, to obtain the second gradient optimization map.

10. The method according to any one of claims 7 to 9, wherein the third loss function comprises an L1 loss function and/or an L2 loss function, and the third loss function further comprises at least one of a multi-scale structural similarity MS-SSIM loss function, a perceptual loss function, and a generative adversarial loss function; or
the third loss function comprises at least one of an MS-SSIM loss function, a perceptual loss function, and a generative adversarial loss function.

11. The method according to any one of claims 2 to 10, wherein the first loss function comprises the L1 loss function and/or the L2 loss function.

12. The method according to any one of claims 2 to 11, wherein the determining, based on the partition indication map and according to a first loss function, a loss value of a first-type area in the second image relative to a first-type area in the first image, to obtain the first loss value comprises:

   determining, based on the partition indication map, an error of each pixel in the first-type area in the second image relative to a corresponding pixel in the first image; and
   determining the first loss value based on the error of each pixel in the first-type area in the second image relative to the corresponding pixel in the first image.

13. The method according to any one of claims 1 to 12, wherein the determining, based on the loss values of the different areas, a total loss value of the second image relative to the first image comprises:

   performing weighted summation on the loss values of the different areas based on at least two weights, to obtain the total loss value;
   when the loss values of the different areas are determined according to one loss function, the at least two weights are different; and
   when the loss values of the different areas are determined according to at least two loss functions, the at least two weights are different or the same.

14. The method according to any one of claims 2 to 6, wherein the partition indication map is an image gradient map, the first-type area comprises a structured area, and the second-type area comprises an unstructured area.

15. The method according to claim 14, wherein the image gradient map is a gradient map represented by gradient masks, and the structured area corresponds to an area, in the image gradient map, in which a gradient mask is 1.

16. The method according to any one of claims 2 to 6, wherein the partition indication map is an image segmentation mask map, the first-type area comprises an area in which a target object is located, and the second-type area comprises an area in which a non-target object is located.

17. The method according to claim 16, wherein the first-type area comprises a face area of the target object.

18. An apparatus for determining an image loss value, wherein the apparatus comprises:

an encoding and decoding module, configured to compress and decompress a first image by using an image encoding and decoding network, to obtain a second image, wherein the second image is a reconstructed image of the first image;
a first determining module, configured to determine a partition indication map of the first image;
a second determining module, configured to determine, based on the partition indication map and according to at least one loss function, loss values of different areas in the second image relative to the first image; and
a third determining module, configured to determine, based on the loss values of the different areas, a total loss value of the second image relative to the first image.

19. The apparatus according to claim 18, wherein the loss values of the different areas comprise a first loss value and a second loss value; and
the second determining module comprises:

a first determining submodule, configured to determine, based on the partition indication map and according to a first loss function, a loss value of a first-type area in the second image relative to a first-type area in the first image, to obtain the first loss value; and
a second determining submodule, configured to determine, based on the partition indication map and according to a second loss function, a loss value of a second-type area in the second image relative to a second-type area in the first image, to obtain the second loss value.

20. The apparatus according to claim 19, wherein the second determining submodule is configured to:

replace the first-type area in the second image with the first-type area in the first image based on the partition indication map, to obtain a third image; and
determine, according to the second loss function, a loss value of the third image relative to the first image, to obtain the second loss value.

21. The apparatus according to claim 19, wherein the second determining submodule is configured to:

replace the first-type area in the first image with the first-type area in the second image based on the partition indication map, to obtain a fourth image; and
determine, according to the second loss function, a loss value of the second image relative to the fourth image, to obtain the second loss value.

22. The apparatus according to any one of claims 19 to 21, wherein the second loss function comprises at least one of a multi-scale structural similarity MS-SSIM loss function, a perceptual loss function, and a generative adversarial loss function.

23. The apparatus according to any one of claims 19 to 22, wherein the apparatus further comprises:

a fourth determining module, configured to determine a first gradient optimization map based on the total loss value; and
a first updating module, configured to update, based on the first gradient optimization map, a network parameter of the image encoding and decoding network.

24. The apparatus according to claim 18, wherein the loss values of the different areas comprise a first loss value and a third loss value; and

the second determining module comprises:

> a first determining submodule, configured to determine, based on the partition indication map and according to a first loss function, a loss value of a first-type area in the second image relative to a first-type area in the first image, to obtain the first loss value; and
> a third determining submodule, configured to determine, according to a third loss function, a loss value of the second image relative to the first image, to obtain the third loss value.

25. The apparatus according to claim 24, wherein the apparatus further comprises:

> a fourth determining module, configured to determine a first gradient optimization map based on the total loss value;
> a gradient blocking module, configured to perform gradient blocking on a first-type area in the first gradient optimization map based on the partition indication map, to obtain a second gradient optimization map; and
> a second updating module, configured to update, based on the second gradient optimization map, a network parameter of the image encoding and decoding network.

26. The apparatus according to claim 25, wherein the gradient blocking module comprises:
a gradient blocking submodule, configured to set, based on the partition indication map, gradient values of the first-type area in the first gradient optimization map to zero, to obtain the second gradient optimization map.

27. The apparatus according to any one of claims 24 to 26, wherein the third loss function comprises an L1 loss function and/or an L2 loss function, and the third loss function further comprises at least one of a multi-scale structural similarity MS-SSIM loss function, a perceptual loss function, and a generative adversarial loss function; or
the third loss function comprises at least one of an MS-SSIM loss function, a perceptual loss function, and a generative adversarial loss function.

28. The apparatus according to any one of claims 19 to 27, wherein the first loss function comprises the L1 loss function and/or the L2 loss function.

29. The apparatus according to any one of claims 19 to 28, wherein the first determining submodule is configured to:

> determine, based on the partition indication map, an error of each pixel in the first-type area in the second image relative to a corresponding pixel in the first image; and
> determine the first loss value based on the error of each pixel in the first-type area in the second image relative to the corresponding pixel in the first image.

30. The apparatus according to any one of claims 18 to 29, wherein the third determining module comprises:

> a weighting submodule, configured to: perform weighted summation on the loss values of the different areas based on at least two weights, to obtain the total loss value, wherein
> when the loss values of the different areas are determined according to one loss function, the at least two weights are different; and
> when the loss values of the different areas are determined according to at least two loss functions, the at least two weights are different or the same.

31. The apparatus according to any one of claims 19 to 23, wherein the partition indication map is an image gradient map, the first-type area comprises a structured area, and the second-type area comprises an unstructured area.

32. The apparatus according to claim 31, wherein the image gradient map is a gradient map represented by gradient masks, and the structured area corresponds to an area, in the image gradient map, in which a gradient mask is 1.

33. The apparatus according to any one of claims 19 to 23, wherein the partition indication map is an image segmentation mask map, the first-type area comprises an area in which a target object is located, and the second-type area comprises an area in which a non-target object is located.

34. The apparatus according to claim 33, wherein the first-type area comprises a face area of the target object.

**35.** A computer-readable storage medium, wherein the computer-readable storage medium stores a computer program, and when the computer program is executed by a processor, steps of the method according to any one of claims 1 to 17 are implemented.

**36.** A computer program product, wherein the computer program product comprises computer instructions, and when the computer instructions are run on a computer, steps of the method according to any one of claims 1 to 17 are implemented.

FIG. 1

FIG. 2

301      305

```
         Processor          Processor                          303
          ┌───────┐          ┌───────┐
          │ CPU 0 │          │ CPU 0 │          ┌──────────┐
          ├───────┤          ├───────┤          │  Memory  │  310
          │ CPU 1 │          │ CPU 1 │          │          │
          └───────┘          └───────┘          │ ┌──────┐ │
                                                │ │Program│ │
Communication  302                              │ │ code │ │
     bus                                        │ └──────┘ │
═══════════╦══════════╦══════════╦════════════════│        │
           │          │          │               └──────────┘
        304 │      306 │      307 │
  ┌─────────────┐ ┌────────┐ ┌──────────────┐
  │Communication│ │ Output │ │ Input device │
  │  interface  │ │ device │ │              │
  └─────────────┘ └────────┘ └──────────────┘
```

FIG. 3

| | |
|---|---|
| Compress and decompress a first image by using an image encoding and decoding network, to obtain a second image, where the second image is a reconstructed image of the first image | 401 |

↓

| | |
|---|---|
| Determine a partition indication map of the first image | 402 |

↓

| | |
|---|---|
| Determine, based on the partition indication map and according to at least one loss function, loss values of different areas in the second image relative to the first image | 403 |

↓

| | |
|---|---|
| Determine, based on the loss values of the different areas, a total loss value of the second image relative to the first image | 404 |

FIG. 4

Original image
Reconstructed image

Perceptual loss+GAN loss

Total loss value

**Forward propagation**

Encoder

Decoder

**Backpropagation**

Encoder

Original image

$m_2$

Decoder

Gradient value of a structured area is zero

Matrix obtained through direct derivation

Total loss value

Second gradient optimization map (after gradient blocking)

First gradient optimization map (before gradient blocking)

FIG. 5

FIG. 6

FIG. 7

FIG. 8

FIG. 9

Encoder

Original image

Q

Decoder

Reconstructed image

m₁

All areas

Pixel-level loss

Perceptual loss+GAN loss

FIG. 10

Encoder

Original image

Q

Decoder

Reconstructed image

m₁

m₂

MSE loss

MS-SSIM loss

FIG. 11

FIG. 12

FIG. 13

FIG. 14

FIG. 15

FIG. 16

FIG. 17

**EP 4 390 755 A1**

| INTERNATIONAL SEARCH REPORT | International application No. |
|---|---|
| | **PCT/CN2022/117817** |

**A.  CLASSIFICATION OF SUBJECT MATTER**

G06K 9/00(2022.01)i;  G06K 9/62(2022.01)i

According to International Patent Classification (IPC) or to both national classification and IPC

**B.  FIELDS SEARCHED**

Minimum documentation searched (classification system followed by classification symbols)

H04N G06K G06F G06T

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 图像, 分区, 损失函数, 损失值, 指示, 加权, 重建, 重构, loss, reconstruct??, partition, division, segmentation, function, MSE, SSIM

**C.  DOCUMENTS CONSIDERED TO BE RELEVANT**

| Category* | Citation of document, with indication, where appropriate, of the relevant passages | Relevant to claim No. |
|---|---|---|
| X | CN 111126359 A (XIDIAN UNIVERSITY) 08 May 2020 (2020-05-08) description, paragraphs [0015]-[0019] | 1, 18, 35, 36 |
| A | CN 112529909 A (BEIJING ANDEYIZHI TECHNOLOGY CO., LTD.) 19 March 2021 (2021-03-19) entire document | 1-36 |
| A | CN 110021052 A (BEIJING BAIDU NETCOM SCIENCE AND TECHNOLOGY CO., LTD.) 16 July 2019 (2019-07-16) entire document | 1-36 |
| A | CN 113129231 A (INSTITUTE OF COMPUTING TECHNOLOGY, CHINESE ACADEMY OF SCIENCES) 16 July 2021 (2021-07-16) entire document | 1-36 |
| A | CN 112669342 A (BEIJING DAJIA INTERNET INFORMATION TECHNOLOGY CO., LTD.) 16 April 2021 (2021-04-16) entire document | 1-36 |
| A | US 2018075581 A1 (TWITTER, INC.) 15 March 2018 (2018-03-15) entire document | 1-36 |

☐ Further documents are listed in the continuation of Box C.   ☑ See patent family annex.

| \* | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 November 2022** | **25 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/117817**

| Patent document cited in search report | | | Publication date (day/month/year) | Patent family member(s) | | | Publication date (day/month/year) |
|---|---|---|---|---|---|---|---|
| CN | 111126359 | A | 08 May 2020 | None | | | |
| CN | 112529909 | A | 19 March 2021 | None | | | |
| CN | 110021052 | A | 16 July 2019 | None | | | |
| CN | 113129231 | A | 16 July 2021 | None | | | |
| CN | 112669342 | A | 16 April 2021 | None | | | |
| US | 2018075581 | A1 | 15 March 2018 | WO | 2018053340 | A1 | 22 March 2018 |
| | | | | US | 2021264568 | A1 | 26 August 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111100885

- CN 202210208033X